(19) Europäisches Patentamt / European Patent Office / Office européen des brevets

(11) **EP 1 206 891 B1**

(12) **EUROPEAN PATENT SPECIFICATION**

(45) Date of publication and mention of the grant of the patent:
**06.02.2008 Bulletin 2008/06**

(21) Application number: **00958433.5**

(22) Date of filing: **11.08.2000**

(51) Int Cl.:
*H04Q 7/38* (2006.01)

(86) International application number:
**PCT/EP2000/007853**

(87) International publication number:
**WO 2001/017305 (08.03.2001 Gazette 2001/10)**

(54) **SUBSCRIBER STATION AND METHOD FOR CARRYING OUT INTER-FREQUENCY MEASUREMENTS IN A MOBILE COMMUNICATION SYSTEM**

TEILNEHMERGERÄT UND VERFAHREN ZUR DURCHFÜHRUNG VON INTERFREQUENZ-MESSUNGEN IN EINEM MOBILEN KOMMUNIKATIONSSYSTEM

POSTE D'ABONNE ET PROCEDE PERMETTANT DE REALISER DES MESURES INTER-FREQUENCE DANS UN SYSTEME DE COMMUNICATION MOBILE

(84) Designated Contracting States:
**AT BE CH CY DE DK ES FI FR GB GR IE IT LI LU MC NL PT SE**

(30) Priority: **31.08.1999 EP 99117128**

(43) Date of publication of application:
**22.05.2002 Bulletin 2002/21**

(73) Proprietor: **TELEFONAKTIEBOLAGET LM ERICSSON (publ)**
**164 83 Stockholm (SE)**

(72) Inventors:
• **PETERSSON, Justus**
**SE-11848 Stockholm (SE)**
• **NÄSMAN, Anders**
**S-169 59 Solna (SE)**
• **MÜLLER, Walter**
**S-194 62 Upplands Väsby (SE)**

(74) Representative: **Tonscheidt, Andreas**
**Ericsson GmbH**
**Ericsson Allee 1**
**52134 Herzogenrath (DE)**

(56) References cited:
**US-A- 5 533 014**          **US-A- 5 896 368**

• **GUSTAFSSON M ET AL: "Compressed Mode Techniques for Inter-Frequency Measurements in a Wide-band DS-CDMA System" WAVES OF THE YEAR 2000+ PIMRC '97. THE 8TH IEEE INTERNATIONAL SYMPOSIUM ON PERSONAL, INDOOR AND MOBILE RADIO COMMUNICATIONS. TECHNICAL PROGRAM, PROCEEDINGS (CAT. NO.97TH8271), HELSINKI, FI, 1 - 4 September 1997, pages 231-235 vol.1, XP002127494 1997, New York, NY, USA, IEEE, USA ISBN: 0-7803-3871-5**
• **TS 25.231 V0.3.0 (1999-06); TECHNICAL SPECIFICATION; 3RD GENERATION PARTNERSHIP PROJECT (3GPP); TECHNICAL SPECIFICATION GROUP (TSG) RADIO ACCESS NETWORK (RAN); WORKING GROUP 1 (WG1); PHYSICAL LAYER - MEASUREMENTS, XP002127381 cited in the application**

**Description**

**FIELD OF THE INVENTION**

The invention relates to a subscriber station and a method for carrying our inter-frequency measurements in a mobile communication system. The invention also relates to a mobile communication system in which such a subscriber station and such a method are employed.

As will be explained with more details below, in a mobile communication system transmission conditions on a connection (communication connection or signaling connection) between a subscriber station and a base transmitter station are monitored and the need for an inter-frequency or inter-system handover is detected, e.g. when the transmission conditions deteriorate. When the need for an inter-frequency or inter-system handover is detected, an inter-frequency measurement trigger signal is generated to indicate the need for an inter-frequency or inter-system handover and to initiate inter-frequency measurements on a different frequency than currently used. In response to the trigger signal inter-frequency measurements are carried-out on one or more different frequencies and if a suitable new frequency has been found the actual an inter-frequency or inter-system handover takes place. Hereinafter, the term "handover" is used to designate an inter-frequency handover or an inter-system handover, even if not explicitly stated.

When a connection is established between the base transceiver station and the subscriber station, even if only a signaling connection is established with the subscriber station being in an active-mode of operation, there always exists some data traffic on the connection and the subscriber station and the network must must carry out inter-frequency measurements when no data is transmitted, since otherwise some of the communicated data on the connection will be lost. Another important aspect is when and how the inter-frequency measurement trigger signal should be generated by the network to initiate the inter-frequency measurements. It should be noted that the inter-frequency measurements themselves are, however, always carried out in the subscriber station in response to the inter-frequency measurement trigger signal.

The present invention in particular addresses the problem which time interval should be used in the subscriber station for carrying-out these inter-frequency measurements.

Hereinafter inter-frequency will be abbreviated with "IF".

**BACKGROUND OF THE INVENTION**

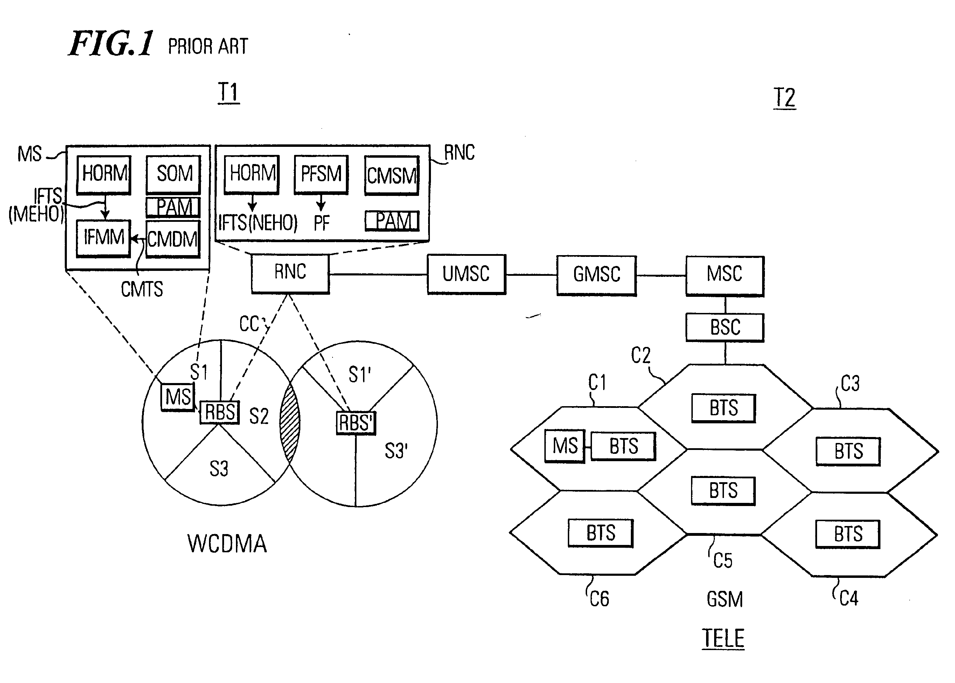

With respect to a conventional method for triggering IF-measurements in a mobile communication system, Fig. 1 shows a general overview of a telecommunication system TELE which comprises at least two different mobile communication systems T1, T2. A subscriber station, e.g. a mobile station MS, which is operable in the first mobile communication system T1, may also be operable in the second mobile communication system T2. Within each mobile communication system T1, T2 the mobile station MS can move around different cells S1, S2, S3, S1', S3' and C1-C6. Due to different handover criteria the mobile station MS may perform an inter-frequency handover within the same system or an inter-system handover to/from the other system. It should be noted that the present invention is equally well applicable for triggering an inter-frequency handover within the same system and/or an inter-system handover and Fig. 1 only shows two mobile communication systems T1, T2 as an example where both such handover procedures may take place.

Fig. 1 shows as an example for the first mobile communication system T1 a WCDMA (Wideband Code Division Multiple Access) or CDMA (Code Division Multiple Access) communication system comprising a network control means RNC (Radio Network Controller), at least one base transceiver station RBS, RBS' (in WCDMA called radio base station), at least one subscriber station MS (Mobile Station) as well as a number of (possibly) overlapping cells S1, S2, S3, S1', S3'.

An example for the second mobile communication system T2 is a communication system according to the GSM (Global System for Mobile Communications), PDC (Packet Digital Cellular) and D-AMPS (Digital-Advanced Mobile Personal Service) standards.

In Fig. 1 an example of a GSM system is shown for the second mobile communication system T2. However, it should be noted that the invention can in principle be applied to any type of digital mobile telephone system and is as such not restricted to the aforementioned systems. The GSM system shown in Fig. 1 comprises the conventional units of a base station controller BSC, at least one mobile switching center MSC as well as a gateway mobile switching center GMSC. The mobile stations MS are served by a plurality of base transceiver stations BTS within the cells C1-C6 in which the mobile station MS can move around.

The network control means RNC of the WCDMA system in Fig. 1 is connected via a UMSC unit to the gateway mobile switching center GMSC of the GSM system.

Depending on the geographical layout of the first and second mobile communication systems T1, T2 the cells S1, S2, S3, S1', S3' of the first mobile communication system T1 may also completely or partially overlap with the cells C1-C6 of the second mobile communication system T2. Of course, if the mobile station MS is to carry out an inter-system handover - then the mobile station MS will be able to operate according to the specifications of the first and the second mobile communication system.

One reason for performing inter-frequency or inter-system handovers in the telecommunication system TELE in Fig. 1 may be due to coverage reasons. This is due to the fact that neither the first communication system nor any other system has a complete coverage in all geographical areas, e.g. hot spots in UMTS. Furthermore, some cells within the mobile communication system may operate on frequencies which are not applicable in adjacent cells. Therefore, by letting the mobile station MS or the network control means RNC perform either an inter-frequency handover of an inter-system handover, the mobile station MS can be used in a larger area without interruptions in the communication.

Another reason for the handover may be capacity reasons. Either the mobile communication system or other mobile communication systems may become heavily loaded at times, so that an inter-system handover may be required. Analogously, the mobile station MS may have established a connection on a particular frequency and it may be necessary that another frequency is to be used. This other frequency may be present within the same cell or in another cell and both are generally termed inter-frequency handover. As indicated in Fig. 1, the inter-frequency measurements (necessary for an inter-frequency handover/or an inter-system handover) is always carried-out by an inter-frequency measurement means IFMM situated in a mobile station MS.

The network control means RNC comprises a paging flag sending means PFSM for sending a paging flag to the mobile station MS when a signalling communication link has already been established between the subscriber station MS and the network. For example, when the mobile station MS has been switched on and has been registered in the network, the subscriber station is in a registered and non-active mode of operation. A standby operation means SOM holds the subscriber station in such a non-active mode of operation. In such a non-active mode of operation the operation of the subscriber station MS is invoked by receiving the paging flag PF from the network control means RNC, namely when a call is pending for the subscriber station SS and when a communication connection is to be set up to the subscriber station MS.

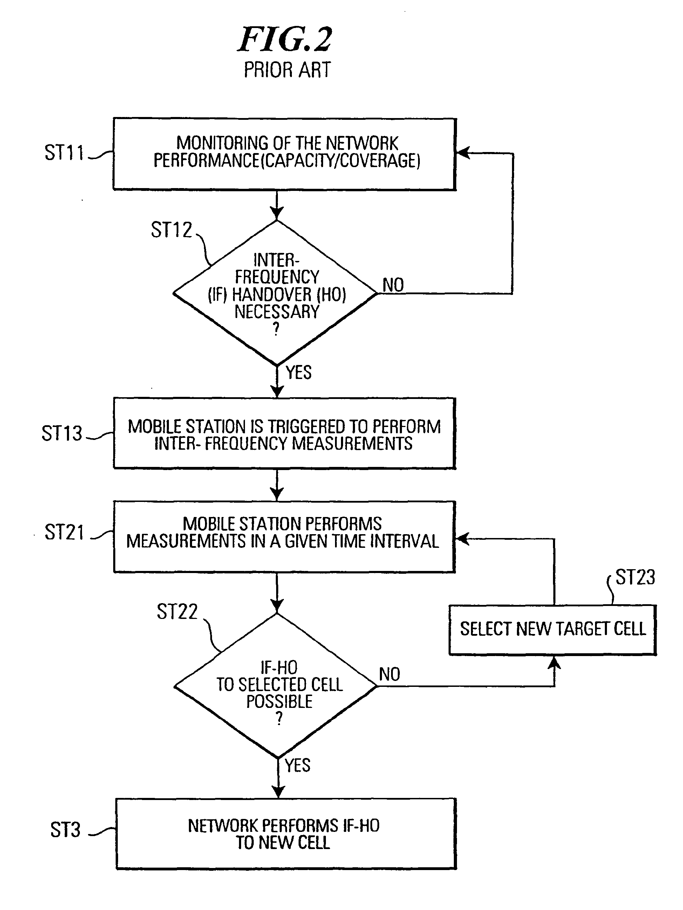

Fig. 2 shows a general flow chart of a method for carrying-out an inter-frequency or inter-system handover in a mobile communication system when a signaling connection or a communication connection is set up. In step ST11 a handover means HORM (HandOveR Means) situated in the network control means RNC or the mobile station MS monitors the network performance regarding the capacity/coverage aspects as explained above. In step ST12 the handover means HORM decides whether in principle a handover is necessary according to the criteria determined in step ST11. If so ("Y" in step ST12), the mobile station is triggered to perform inter-frequency measurements in step ST13. More particularly, in step ST13 an IF measurement trigger signal IFTS is output by the handover means HORM. As indicated in Fig. 1, the IF-measurements means IFMM can be triggered by a mobile-evaluated-handover trigger signal IFTS or a network-evaluated-handover trigger signal IFTS in step ST13.

In order to perform a fast and reliable inter-frequency handover when there is the need for such a handover, it is advantageous to provide the outputting of a reliable trigger signal IFTS in either the network control means RNC and/or in the mobile station MS. Of course, in order to provide a well-designed trigger procedure, there is not a single triggering condition that needs to be monitored in step ST11 and which will eventually trigger the mobile station MS to perform IF-measurements on other frequencies or systems. Usually, a couple of conditions are monitored in step ST11 and must be fulfilled that the trigger signal is output in step ST13. Such conditions may for example comprise an excessively high output power from either the down-link (network to subscriber station) connection or the up-link (subscriber station to network) connection and/or a high load in the cell. If for example the network detects by measuring the uplink-interference a high load in the cell, it will attempt to trigger IF-measurements and thus a handover to a different cell or a different system. Likewise, if transmission conditions deteriorate, the mobile station MS is triggered to more and more increase its output power and therefore a high output power also indicates the need for IF-measurements and thus the need for a handover.

The prior art reference TS 25 231 V0.3.0, technical specification: Third Generation Partnership Project (3GPP); Technical specification group (TSG), radio access network (RAN); working group 1 (WG 1); Physical Layer-Measurements in the IS 95 standard, dated June 1999 (hereinafter referred to as reference [1]) describes in particular in chapters 3., 4., 5.1.2 a number of conventional measurement trigger criteria. In the mobile communication system described in reference [1] both a network handover means HORM and a subscriber station handover means HORM monitor the performance of the radio-link (RL) and can request a handover. For example, the network handover means HORM monitors the down-link by measurement reports from the subscriber station MS. The network handover means HORM also monitors the traffic load. As explained above, a hand-over evaluated by a mobile station MS is called a mobile-evaluated hand-over, abbreviated MEHO. A hand-over evaluated by the network is called a network- evaluated hand-over, abbreviated NEHO. As indicated in Fig. 1, since the mobile station MS and the network control means RNC each comprise a handover HORM each can initiate a handover according to the triggering conditions which are respectively monitored. The four basic criteria during the monitoring in step ST11 in the prior art are the "base station traffic load exceeded" condition, the "distance limits exceeded" condition, the "pilot strength below a predetermined threshold" condition and the "power level exceeded" condition as will be explained below and as is described in the aforementioned reference [1].

Firstly, regarding the condition "base station traffic load exceeded",the network handover means HORM determines the necessity for a handover by monitoring loads at all base stations BS in the mobile communicaton system T1 and outputs the IF measurement signal IFTS in order to balance loads between all base stations, in order to achieve a higher traffic efficiency. For example, the network handover means HORM outputs the trigger signal in step ST13 whenever the load at a base station exceeds a predetermined load threshold.

Secondly, regarding the condition "distance limits exceeded" the subscriber handover means and/or the network handover menas HOM are adapted to determine the necessity for the handover on the basis of a supervision of the distance between a base station BS and the subscriber station MS. The distance between the relevant base station and the subscriber station can be determined in a synchronized system. Therefore, the trigger signal IFTS is output in step ST13 whenever the measured distance exceeds a predetermined distance.

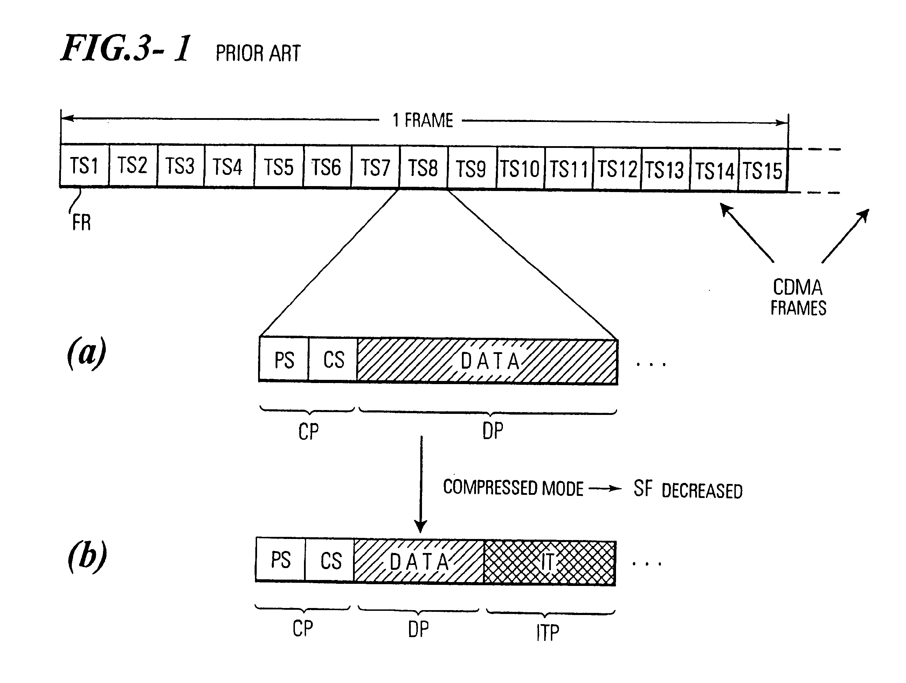

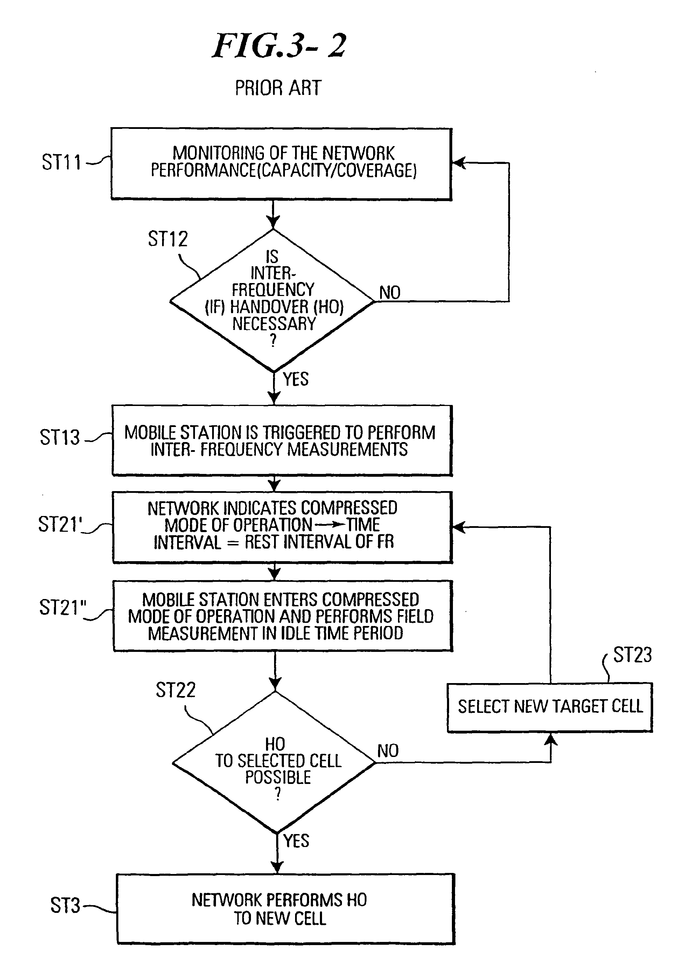

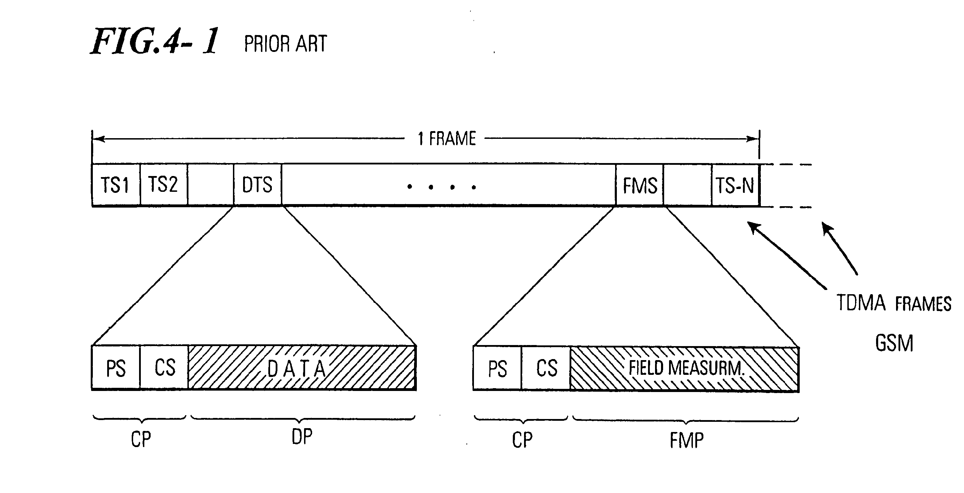

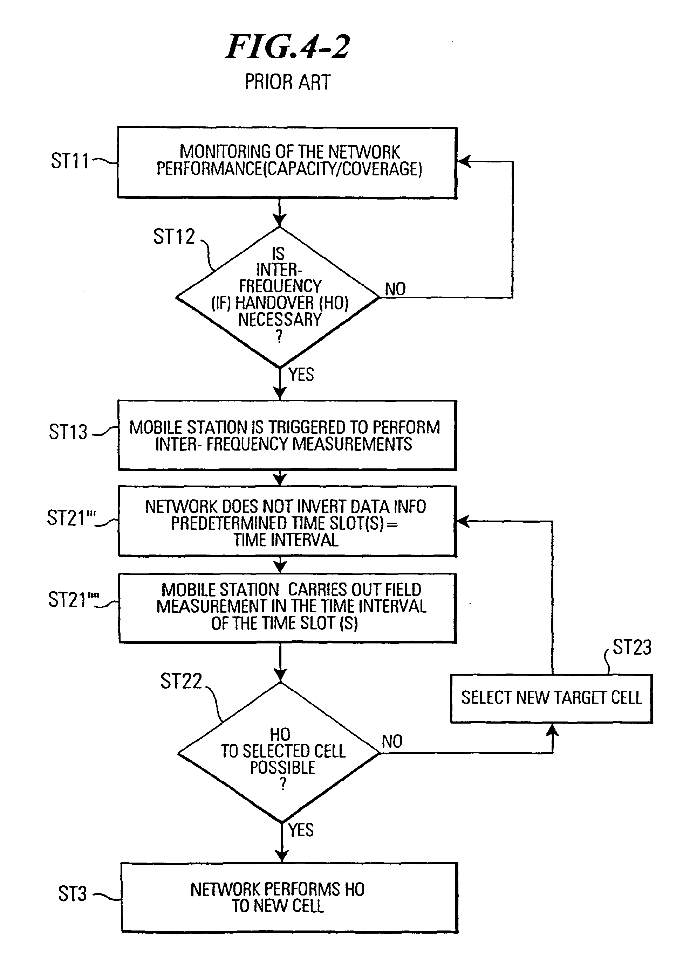

Thirdly, regarding the condition "pilot strength below a predetermined threshold", the subscriber handover means and/or the network handover means are adapted to determine the necessity for a handover on the basis of a supervision of a measured pilot signal strength falling below a predetermined power threshold. As is illustrated in Fig. 3-1 and in Fig. 4-1, in modern mobile communication systems a data transmission between a base transceiver station RBS and a subscriber station MS is carried-out by transmitting data frames FR and the transmission frames FR consist of a control portion CP and a data portion DP. This is true for CDMA frames (Fig. 3-1) and TDMA frames in GSM (Fig. 4-1). The control portion CP consists at least of pilot symbols PS and preferably also of other control symbols CS. For example, each base station BS may transmit a pilot signal PS of constant power on the same frequency. The subscriber station MS can monitor the received power level of the received pilot signal and can thus estimate the power loss on the connection between the base station BS and the subscriber station MS. Using the pilot signal strength for estimating the path loss, the subscriber handover means HORM outputs the trigger signal IFTS in step ST13 if the path loss is greater than a predetermined path loss threshold.

Fourthly, regarding the condition "power level exceeded" the subscriber handover means and/or the network handover means are adapted to determine the necessity for a handover on the basis of a supervision that in response to a power increase command by a base station BS a subscriber power adjustment module PAM (shown in Fig. 1 in the mobile station MS) is unable to further increase its power on the up-link of the communication connection CC.

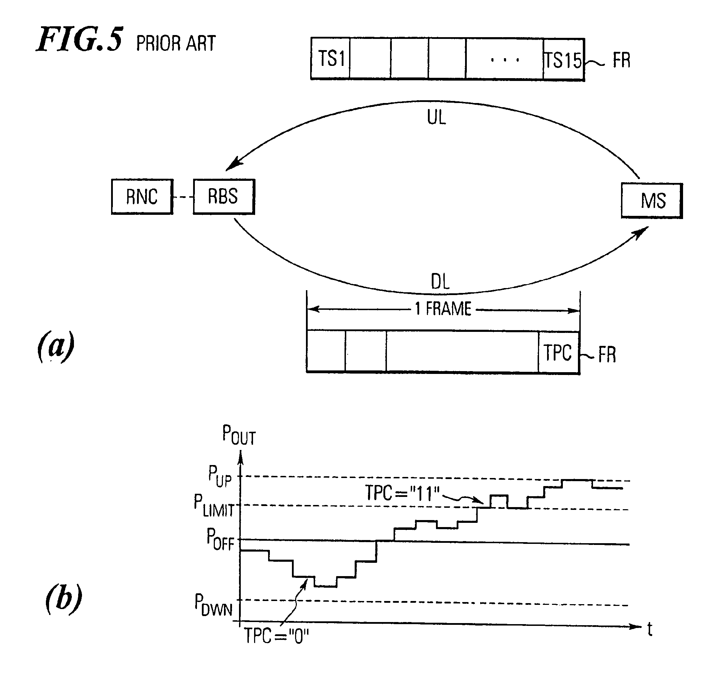

Fig. 5a-d show such a conventional adjustment of the transmission power when exchanging frames FR consisting of a number of time slots TS1... TS15 between a base transceiver station (generally called node "B") RBS and a subscriber station MS. A power adjustment module PAM in the base transceiver station (node "B") RBS presets an upper threshold PUP, a lower threshold PDWN and an offset value POFF for the power. The power offset value POFF is used in connection with a slow power control and the upper and lower threshold values PUP, PDWN are used in connection with a fast power control in the node B.

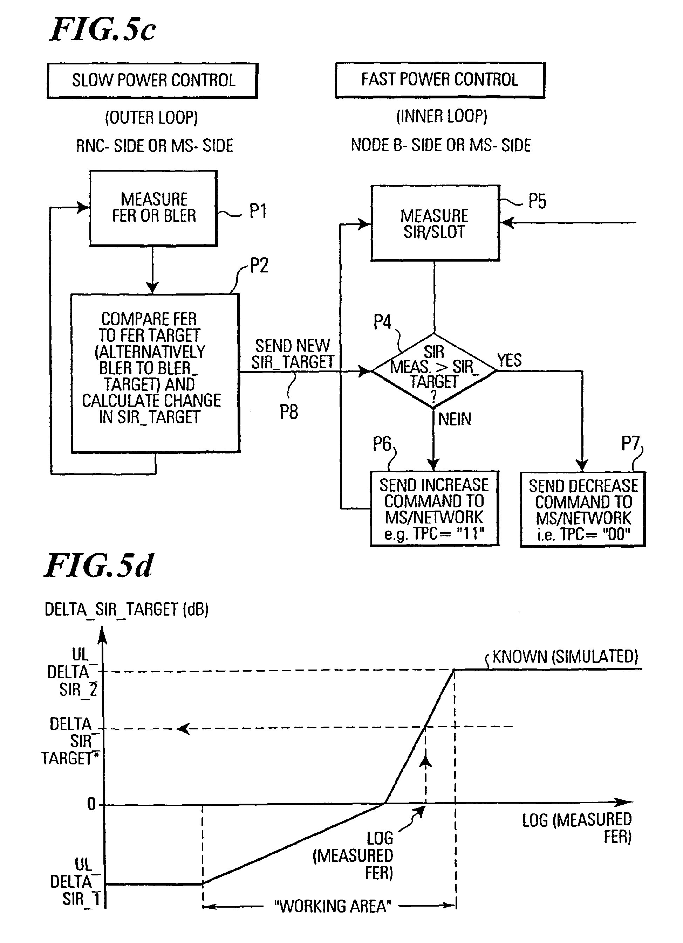

The slower power control and the fast power control as illustrated in Fig. 5b is carried out according to the flow chart in Fig. 5c. Steps P1, P2 relate to the slow power control (the outer control loop) carried out on the RNC-side or the MS-side. In step P1 the frame error rate FER (or the block error rate BLER) is measured and in step P2 the measured FER (or the BLER) is compared with a FER target value (or a BLER target value). In step P8 a new signal interference ratio target value SIR-target is obtained. As shown in Fig. 5d, a known (simulated) relationship between a delta_SIR_target value (dB) and the logarithm of the measured FER value exists. Between two threshold values UL_delta_SIR_2 and UL_delta_SIR_1 a predetermined "working area" exists. This relationship is known, i.e. simulated beforehand. As indicated in Fig. 5d, depending on the measured value log (measured FER) a value delta_SIR_target* is read out. A new SIR_target value SIR_target is calculated according to the following equation:

$$\texttt{SIR\_target=SIR\_target + delta\_SIR\_target}^{*}$$

Thus, the outer loop or slow power control will generate in step P8 new SIR-target values whenever steps P1, P2 are executed. The new SIR-target value is then used in the fast power control (inner loop) carried out on the node B-side or the MS-side, respectively.

In step P5 the SIR (Signal-to-Interference ratio) per slot is measured and in step P4 the measured SIR value is compared with the (current) SIR-target value as obtained in step P8. If the measured SIR value is greater than the current SIR-target value, then a decrease command is sent to the mobile station MS/network, i.e. the transmission power control parameter TPC is set to TPC = "00" in step P7. When the measured SIR value is smaller then the (current) SIR-target value in step P4, then an increase command is sent to the mobile station MS/network in step P6 by setting the transmission power control parameter TPC to TPC = "11".

As illustrated in Fig. 5b, the slow power control and the fast power control result in a stepwise adjustment of the power Pout on the downlink DL. Since the slow power control performs steps P1, P2 for calculating the frame error rate FER (or block error rate BLER) for every frame (or block) a new SIR-target value is obtained less frequently than the fast power control carried out with steps P5, P4, P6, P7 for each slot.

The offset value $P_{off}$ and the upper and lower threshold values $P_{up}$, $P_{dwn}$ are also used in the power adjustment. For example, when the output power Pout exceeds the upper threshold $P_{up}$ then the offset value $P_{off}$ is slightly increased and when the power is lower than the lower threshold $P_{dwn}$ the offset value $P_{off}$ is slightly decreased. The stepwise adjustment of the power is always performed within the power range between $P_{dbn}$ and $P_{up}$. Since the values $P_{off}$, $P_{up}$ and $P_{dwn}$ are only used for the triggering of a soft-handover, they are not of any further relevance for the present invention and any further descriptions thereof are therefore omitted.

As explained above, in the fourth condition "power level exceeded" the node B (the base station BS) commands the subscriber station MS to increase its power and if the power adjustment module PAM in the node B notices that there is no further increase of power in response to a power increase command TCP, the network handover means HORM may request a measurement by issuing the IF trigger signal.

Regarding the above described four different conditions, there are a number of significant disadvantages and some of the four described conditions can not even be implemented in future wideband code division multiple access systems (WCDMA).

Whilst reference [1] relates to the IS-95 standard and describes a synchronized CDMA system, reference [2]: TS 25.201 V2.1.0, a third generation partnership project (3GPP); technical specification group (TSG); radio access network (RAN; working group 1 (WG1); physical layer-general description, dated June 1999, describes a non-synchronized WCDMA system, in particular the multiple access used therein. In a synchronized system like the one described in reference [1] either the base station BS or the subscriber station MS can still estimate the distance between them (second trigger condition). This is possible since the chip rate on the pilot channel and all channels are synchronized (locked) to a precise system clock. This is in reference [1] accomplished by using a global positioning system (GPS). However, due to multipath propagation delay and shadowing between the base station BS and the subscriber station MS, the estimated distance may be erroneous. Therefore, the second condition "distance limits exceeded" may not be very accurate.

In condition 3 "pilot strength below a predetermined threshold" the subscriber station MS must perform measurements for triggering IF measurements and thus for triggering a handover. These continuous measurements of the pilot signal strength may drastically reduce the lifetime of the battery of the subscribers station, since the subscriber station MS must perform an average filtering of the pilot channel during a predetermined measurement time. The decrease of the lifetime of the battery is to be avoided in all circumstances, since there are already a lot of measurements that must be performed by the subscriber station, e.g. the IF measurements on other frequencies when the IF measurement trigger signal IFTS has been issued. Furthermore, the subscriber station MS has to report the pilot signal strength measurements in some form over the air-interface to the base transceiver station RBS (node B) and to the network control means RNC and this will additionally increase the interference level on the up-link UL as well as the signaling load in the network. Therefore, a load estimation according to the first condition "base station traffic load" when used in connection with the third condition "pilot strength below a predetermined threshold" may cause more signalling due to the increased signaling in an air interface of the network.

Therefore, the major disadvantage of the prior art trigger mechanisms is that some of the conditions cannot be used in synchronized or non-synchronized systems, that the lifetime of the battery is reduced and that the interference level on the up-link UL as well as the signaling load in the network is increased.

Returning to Fig. 2, in response to an IF measurement trigger signal IFTS (generated by the subscriber handover means HORM or the network handover means HORM), the subscriber station will perform IF measurements in a given time interval in step ST21. As explained above, in order to perform a fast and reliable inter-frequency handover, it is advantageous to let the subscriber station MS perform signal quality measurements on a different frequency, e.g. in a target cell or in a different system, and to report these to the network control means RNC, such that the network control means RNC can base its handover decisions, as to which cell the subscriber station MS is to be handed over, on these reported signal quality measurements. As explained below, the performing of IF-measurements in the subscriber station MS is not a trivial task. For example, in CDMA and FDMA systems the receiver of the subscriber station MS is normally busy receiving information on the current frequency and thus some measurement time has to be created in some way in such systems in order to allow inter-frequency measurements without a drastic loss of data. Conventional methods for determining a time interval in which field measurements are carried out will be described below as reference to Fig. 3-1, 3-2, Fig. 4-1, 4-2 and Fig. 6.

As already discussed above with reference to Fig. 3-1, in a CDMA communication system the data communication is performed by exchanging data frames FR consisting of a plurality of time slots TS1..TS15. Each time slot comprises a control portion CP and a data portion DP. As described in the aforementioned reference [2] and as also indicated with step ST21' in Fig. 3-2 and in Fig. 3-1, it also possible to carry out the data transmission in a compressed mode (also called slotted mode) in order to create some time for the IF measurement. For this purpose the network control means RNC comprises a compressed mode setting means CMSM in which the data contained in the data portion DP is compressed, i.e. concentrated to a smaller part of the frame, resulting in an idle time portion ITP. The subscriber station MS comprises a compressed mode determining means CMDM which determines i.e. realizes - being informed about the compressed mode of transmission via signalling or some information sent from the compressed mode setting means CMSM of the network control means RNC - the compressed mode of operation. If such a compressed mode of operation is detected, the subscriber station MS enters a compressed mode of operation and performs the IF measurements in the idle time IT in step ST21" in Fig. 3-2. Descriptions of the compressed mode can also be found in the patents US 5,533,014 and US 5,896,368.

In a CDMA system such a concentration of information is achieved by reducing the processing gain G = chips/ information bits = 1/SF, e.g. by decreasing the spreading factor SF. Another possibility how the concentration of information can be achieved is by changing the channel coding scheme, e.g. from r = 1/3 to r = 1/2. Due to the compressed mode of operation a time interval IT is generated in which the IF measurements can be carried out by the IF measurement means IFMM in the subscribed station MS.

Fig. 4-1 and steps SC21''' and ST21'''' show another possibility of how a time interval can be provided in which the field measurements can be carried out. In a GSM system, a specific time slot FMS of a frame consisting of a plurality of TDMA time slots TS1...TS-M is specified and the field measurements are carried-out in the portion FMP. That is, in a GSM system a predetermined field measurement slot is provided in which no data is sent from the network control means or the base station transmitter to the subscriber station MS.

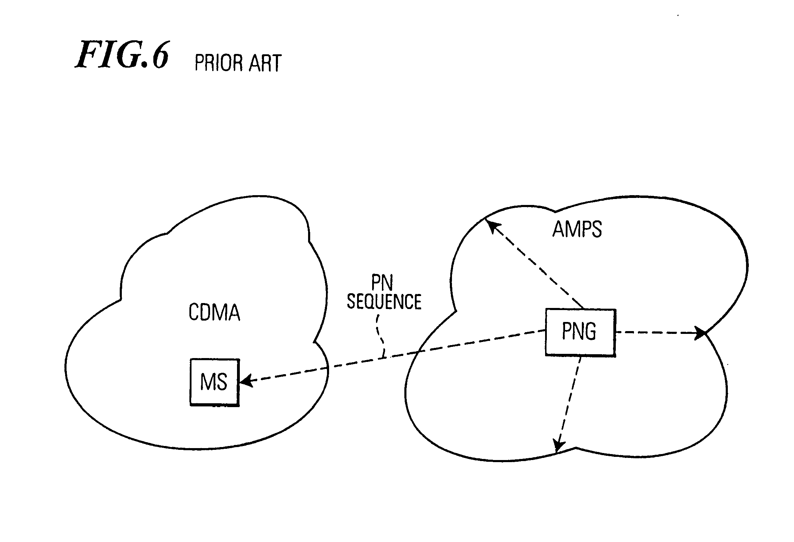

A further approach how an idle time interval can be provided is described in reference [1] for the case when an inter-system handover should be carried-out. In this case, as illustrated in Fig. 6, the subscriber station MS does not perform any measurements on another system and instead the other system transmits a pseudo-noise PN sequence which is received by the subscriber station MS on the same frequency on which the subscriber station MS already communicates. When the power of this PN sequence exceeds a predetermined threshold during a predetermined time, compared to other PN sequences, an inter-system handover is carried-out.

As shown in Fig. 2 and in Fig. 3-1, 4-1, the network control means RNC triggers the mobile station and step ST13 to perform the IF measurements and it will also indicate to the subscriber statin MS on which frequency belonging to a different cell or a different system said IF measurements are to be carried-out. The subscriber station SS will report the IF measurements back to the network control means RNC within a predetermined time. Then, in step ST22, the network control means RNC will determine whether a handover to the selected frequency (cell or different system) is possible. If it is not possible, because for example a too high interference is detected on the new frequency, the network control means selects a new target cell (frequency) in step ST23 and the IF measurements are repeated by the subscriber station MS in step ST21. Furthermore, the network control means RNC can order the subscriber station MS to perform a periodic search or a single search. Such a procedure is for example described in reference [1] for a synchronized communication system.

In some systems like CDMA 2000 the subscriber station MS not only reports the IF measurements back to the network control means, but it also indicates to the network control means RNC how long (time-wise) and when (the starting time) the subscriber station MS will be able for performing the desired IF measurements. If the network control means RNC has knowledge of the time-interval in which the subscriber station MS intends to perform the IF measurements, then the network control means RNC can make some provisions to compensate for data frames, which would be sent by the network control means RNC, but which the subscriber station MS would not process in the time interval in which it performs the IF measurements. That is, actually data frames will get lost in the time period in which the subscriber MS performs the field measurements unless further provisions are made.

One possibility is that the network control means RNC increases the power before or after the measurement time interval or the intervals. Since the error rate is always evaluated over a plurality of data frames, such an increase of power before and after the measurement time interval enables to keep the overall quality for error rate to an average level which will not exceed the requirements of an average error rate. On the other hand, a similar situation occurs on the side of the subscriber station MS, i.e. it will not be possible for the subscriber station MS to transmit data frames in the measurement time interval. Therefore, also the subscriber station MS may compensate possible unsent frames by increasing the power before and after the determined measurement time interval. Therefore, on the side of the subscriber station MS and on the side of the network control means RNC the quality of the received is increased. However, the above described procedures (which are generally used in CDMA 2000 and IS' 95) for providing a given time interval in which the mobile station MS is to carry-out field mesurements in step ST21, the PN sequence transmission and the compensation for erased frames by increasing the power, still exhibit some major drawbacks when implemented in the system as explained below.

In addition, the WCDMA procedure of carrying-out field measurements in connection with the compressed mode of operation has the following disadvantages, in particular for the system. If the spreading factor SF in the down link DL is reduced to provide the idle time interval IT in which the subscriber station MS is to perform the field measurements on other systems, the available channelization codes are reduced. That is, the hard capacity for the CDMA system is decreased.

On the other hand, if the channel coding rate is increased for a certain time period, a complicated code-rate apparatus must be implemented in the network control means RNC, since a CDMA system can carry services with different coding schemes and different interleaving depths on the same radio link.

Furthermore, the subscriber station MS has to increase its output power when measurements are performed due to the compressed mode operation, since the same data information is transmitted during a smaller time period, i.e. in the compressed data period. If the output power of the subscriber station MS and/or base transceiver station RBS would not be increased, the performance will be decreased. However, this requirement to increase the peak power of the subscriber station MS may imply a distance limitation if the subscriber station MS is already transmitting at its maximum output power. Furthermore, there is a higher risk to lose information, since the data field is not protected to the same extent when the coding rate is reduced.

The procedure to use a PN sequence transmission as shown in Fig. 6 has the following disadvantages. In this case, all other existing mobile communication systems have to be equipped with an apparatus which transmits a PN sequence which can be detected by the subscriber station MS. This will imply high costs for the operators (and thus for the end users). Moreover, the PN sequence used in the other mobile communication systems will interfere with the CDMA systems and will reduce the capacity as well as the quality of data transmission.

The last mentioned method of increasing the power before and after the measurement time interval has the disadvantage that there is a high risk that a loss of frames due to the measurement time interval will deteriorate the speech quality in situations where speech quality is already very low, when it is likely that the subscriber station MS wants to do an inter-frequency handover close to a cell border or when the cell (sector) exhibits a high load.

Summarizing the above disadvantages of providing a time interval for IF measurements according to the afore described prior art, such provisions of the measurement time interval will result in a decreased quality of service (e.g. due to loss of frames), require a complicated system modification (due to the incorporation of PN sequence generators), and will shorten the lifetime of the battery in the subscriber station MS (if the power is increased before and after the time interval).

## SUMMARY OF THE INVENTION

As explained above, the above described procedures for triggering and carrying-out IF measurements in a mobile communication system are generally disadvantageous since the lifetime of the battery of the subscriber station MS is reduced (due to the specific triggering method use) and the quality of service of the data transmission is degraded (due to loss of frames) and the system configuration may become complicated (due to the incorporation of PN sequence generators). The present invention aims at avoiding these disadvantages.

In particular, the object of the present invention is to provide a subscriber station, a method and a mobile communication system in which the inter-frequency measurements carried out by the subscriber station do not lead to a deterioration of the quality of the service or a reduction of the lifetime of the battery without requiring a complicated system configuration.

This object is solved by a subscriber station (claim 1 and 3) of a mobile communication system including an inter-frequency measurement means adapted to perform IF measurements, characterized by a data transmission determining means adapted to determine a predetermined time interval in which a base transceiver station will not direct to said subscriber station a data transmission, wherein said IF measurement means is adapted to perform said IF measurements in said predetermined time interval.

This object is also solved by a method (claim 16 and 30) for performing inter-frequency IF measurements in a subscriber station of a mobile communication system, characterized by the steps of determining a predetermined time interval in which a base transceiver station will not direct to said subscriber station a data transmission: and performing said IF measurements in said predetermined time interval.

This object is also solved by a mobile communication system (claim 31) comprising at least one subscriber station including an inter-frequency IF measurement means adapted to perform IF measurements and at least one base transceiver station for performing data transmissions with said subscriber station; characterized by said subscriber station comprising a data transmission determining means adapted to determine a predetermined time interval in which a base transceiver station will not direct to said subscriber station a data transmission, wherein said IF measurement means is adapted to perform said IF measurements in said predetermined time interval.

According to a first aspect of the invention a data transmission determining means is provided in the subscriber station in order to determine a predetermined time interval in which a base transceiver station will not direct a data transmission to a said subscriber station. The IF measurements are then carried out in the subscriber station in this predetermined time interval in which no data transmission takes place.

According a second aspect of the invention this determination of a time interval in which no transmission takes place is performed by determining the power ratio of the information contained in a data portion of a transmission frame to the information contained in the control portion of the data frame. If the power ratio is below a certain threshold, a power estimation means determines that no data transmission would take place in a time interval corresponding to a predetermined number of data slots following the output of an IF measurement trigger signal.

According to a third aspect of the invention, the determination of the no-data-transmission interval is made by monitoring a paging flag sent from the network control means in a paging flag monitoring means of the subscriber station. The predetermined time interval corresponds to a predetermined number of data slots after said paging flag is not detected.

According to a fourth aspect of the invention, the subscriber station carries out the IF measurements in the predetermined time period in which no data tansmission takes place and additionally also in some idle time intervals of a time slot when a data transmission is performed in a compressed mode of operation.

According to a fifth aspect of the invention, IF measurements are carried out in the subscriber station in the predetermined time interval in which no data transmission takes place and additionally also in a time interval in which a data transmission has been determined. In such case the subscriber station comprises a deletion means for deleting data arriving from the network.

According to a sixth aspect of the invention, the fourth and fifth aspects can be used in combination.

Further advantageous embodiments and improvements of the invention may be taken from the dependent claims. Furthermore, the invention can comprise embodiments resulting from a combination of aspects and features which have been separately described and/or claimed in the description and/or the attached claims.

Hereinafter, embodiments of the invention will be described with reference to the attached drawings.

**BRIEF DESCRIPTION OF THE DRAWINGS**

Fig. 1       shows a principal overview of a telecommunication system TELE comprising at least two different mobile communications systems T1, T2 according to the prior art;

Fig. 2       shows a flow chart for performing an inter-frequency and/or inter-system handover in the telecommunication system TELE shown in Fig. 1;

Fig. 3-1     shows the constitution of data frames and time slots when a compressed mode of operation is used;

Fig. 3-2     shows a flow chart similar to Fig. 2 when a compressed mode of operation is used as shown in Fig. 3-1;

Fig. 4-1     shows the provision of a field measurement time slot in a conventional TDMA mobile communication system such as GSM;

Fig. 4-2     shows a flow chart similar as in Fig. 3-2 for the case when field measurements are carried out in a specific field measurement time slot as shown in Fig. 4-1;

Fig. 5a      shows a diagram illustrating a power adjustment procedure between a subsriber station MS and a node B (base transceiver station RBS) according to the prior art;

Fig. 5b      shows the stepwise adjustment of the output power on the downlink DL;

Fig. 5c      shows a slow power control and a fast power control resulting in the stepwise change of the output power in Fig. 5b; and

Fig. 5d      shows the mapping of a measured frame error rate FER or block error rate BLER to a delta_SIR_target value;

Fig. 6       shows a diagram for illustrating a handover procedure in connection with the transmission of PN sequences from a PN sequence generator PNG for inter-system handovers;

Fig. 7       shows a principle block diagram of a subscriber station MS and a network control means RNC according to the invention;

Fig. 8       shows a flow chart similar to Fig. 2 for performing inter-frequency measurements according to the principle of the invention;

Fig. 9       shows a first embodiment for performing inter-frequency measurements according to the invention; and

Fig. 10    shows a second embodiment for performing inter-frequency measurements according to the invention.

It should be noted that throughout the drawings the same or similar reference numerals designate the same or similar steps and features. In particular, the units described for a conventional subscriber station MS and a conventional network control means RNC in Fig. 2 are also present in the embodiments of the invention. Furthermore, it should be noted that the invention is not restricted to the specific CDMA, WCDMA, D-AMPS or GSM systems described above. That is, the invention can be applied to any telecommunications system where a handover needs to be performed between frequencies, cells and different systems.

## PRINCIPLE OF THE INVENTION

It should be noted that handover procedures and IF measurements are carried out in both cases when a communication connection CC is set up or when merely a signaling connection has been set up with the mobile station MS in a non-active mode of operation.

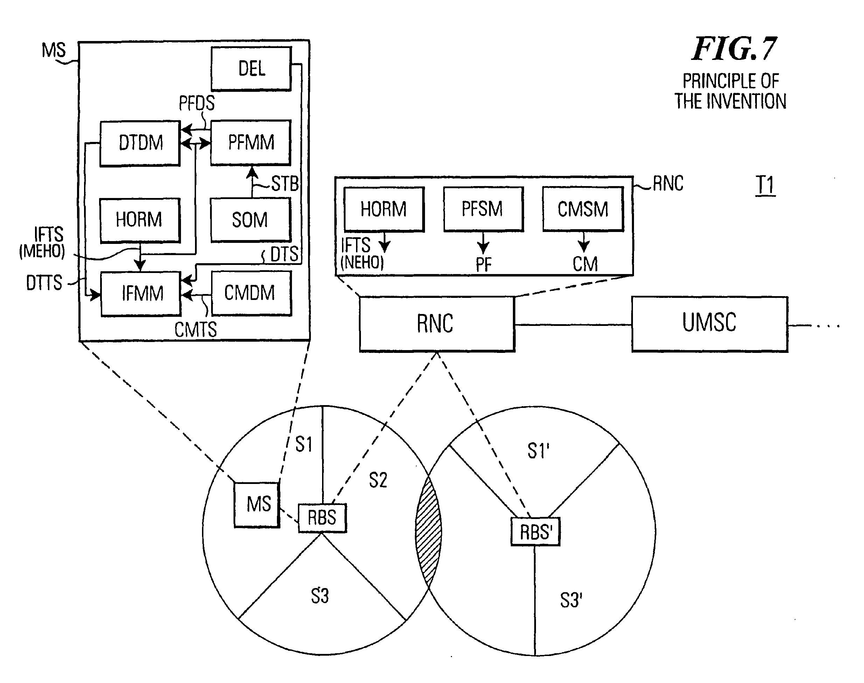

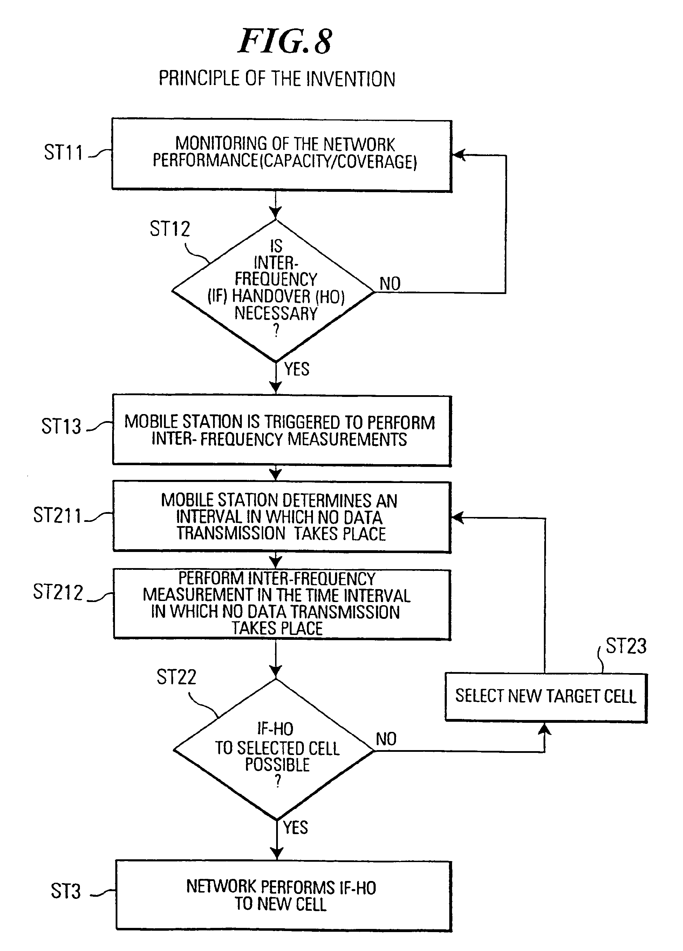

Fig. 7 shows a principle block diagram of a mobile communication system T1 according to the invention. In addition to the units already illustrated in Fig. 1 according to the prior art the mobile station MS according to the invention comprises a data transmission determining means DTDM, a paging flag monitoring means PFMM and a deletion means DEL. Fig. 8 shows a principle flow diagram according to the principle of the invention where the data transmission determining means DTDM and the IF measurement means IFMM are employed in steps ST211, ST212. The other steps ST11, ST12, ST22, ST23, ST3 correspond to those steps already illustrated in Fig. 2. In particular, when it has been determined that there is a need for a handover due to a capacity or coverage reason in step ST11, ST12, the mobile station receives an IF measurement trigger signal IFTS. This signal can be generated, as described with reference to Fig. 1 above, by the handover means HORM situated in the network control means RNC or the subscriber station MS. That is, also in the principle of the invention the IF measurements are triggered by means of a network-evaluated-handover NEHO or a mobile-evaluated-handover MEHO as described above.

However, the aspect of the present invention is that a specific determination of the time interval in which the subscriber station MS is to carry out the IF measurements is made entirely autonomously by the subscriber station MS in step ST211 shown in Fig. 8. In particular, the data transmission determining means DTDM is adapted to determine a predetermined time interval in which a base transceiver station RBS will not direct to said subscriber station MS a data transmission and the IF measurement means IFMM will perform the IF measurements in this predetermined time interval in which no data transmission will take place. That is, the subscriber station knows that there is no need to process data from the incoming bit stream during a predetermined time interval, e.g. during a couple of time slots or during a complete frame, when the subscriber station MS has detected this "no-data period". Various possibilities exist how the subscriber station MS can autonomously detect and predict such a "no-data time interval" in which the IF measurement means IFMM is to carry out the field measurements in step ST212 in Fig. 8.

Preferably the data transmission determining means DTDM starts determining said predetermined time interval in response to said IF measurement trigger signal IFTS. That is, only if the output DTTS (data transmission time interval signal) is output by the means DTDM and the IF trigger signal IFTS is output by a handover means HORM the IF measurement means IFMM will start performing the IF measurements.

Therefore, as explained above, when the network control means RNC and/or the subscriber station MS has decided that the subscriber station MS shall measure the signal quality on at least one other frequency within the same system or on other systems (i.e. when the subscriber station has generated/received the IF measurement trigger signal IFTS), then the subscriber station MS performs inter-frequency signal quality measurements when a "no-data period" is detected to be present for a predetermined time interval. This is preferably done, when the quality of service (QoS) requirement(s) of the present service(s) allows this. Since the subscriber station MS has the ability to perform measurements when no-data periods are detected, the subscriber station MS can achieve faster measurement periods on an other frequency within the same system or on other systems. Since measurements are carried out when no-data is being transmitted, the measurements do not influence at all the quality of service, i.e. they do not degrade other transmission conditions at all.

## FIRST EMBODIMENT OF THE INVENTION

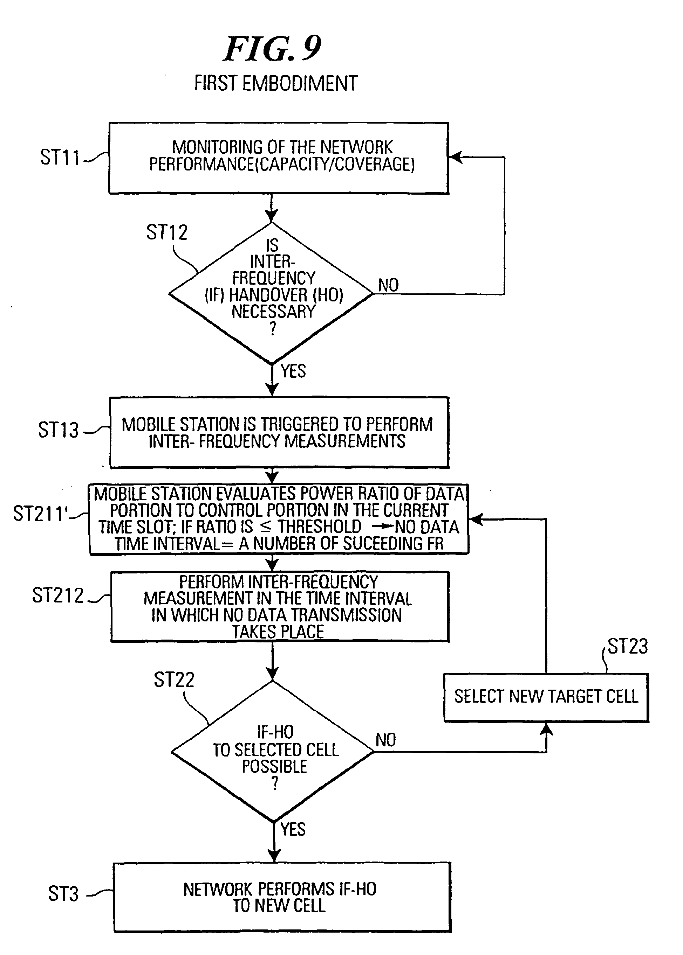

As explained above, data transmission between the network control means (the radio network controller) RNC and the base transmitter station RBS and the subscriber station MS can be carried out by exchanging data frames FR consisting of a plurality of time slots TS1...TS15. The transmission frames FR consist of a control portion CP and a data portion DP. Fig. 9 shows with the steps ST211', ST212 a first embodiment of the invention where the determination of the no-data time interval is made by evaluating data within the time slots.

In the first embodiment the data transmission determining means DTDM is adapted to determine the power ratio of the information contained in the data portion DP to the information contained in the control portion CP. The data transmission determining means comprises a power estimation means adapted to determine that no-data transmission will take place in a time interval corresponding to a predetermined number of data frames or data slots following the output of the IF measurement trigger signal IFTS, if the determined power ratio is below a predetermined power ratio.

It is possible that the data transmission determining means DTDM or the power estimation means thereof performs the determination of the power ratio and the comparison of the power ratio with a predetermined power ratio in a plurality of slots or a complete frame. When in one time slot (or several succeeding time slots) a power ratio is determined which is below a predetermined power threshold, then the subscriber station MS estimates that presently, at least for the number of succeeding time slots or frames, no-data transmission will take place from said network control means RNC and the base transmitter station RBS. Therefore, the predetermined time interval determined in step ST211' corresponds to at least one time slot or frame following the time slot in which the power ratio determination has been performed. Preferably, the time interval corresponds to several time slots or several frames following the time slot in which the determination has been made. After determining the time interval, inter-frequency measurements are carried in the subscriber station MS in step ST212 in this time interval.

As explained above, the control portion CP consists at least of pilot symbols PS (and almost always of additional control symbols CS). In the case of a communication on a dedicated physical channel, at least the pilot symbols are transmitted, even if there is no data to transmit. Therefore, preferably the data detransmission determining means DTDM evaluates the ration between the power of the data symbols and the power of the pilot symbols and when this ratio is below a predetermined power threshold, then the subscriber station MS estimates that a couple of time slots or frames following the evaluation time slot will carry no-data.

Preferably, a couple of time slots or frames are evaluated, i.e. in a couple of succeeding time slots the ratio of the power of the data symbols to the power of the pilot symbols is determined and only if this power ratio is below the predetermined threshold over a number of successive time slots, the data transmission determining means DTDM will finally decide that a predetermined number of time slots or frames after the last evaluated time slot no-data transmission is planned by the network control means RNC. Therefore, completely autonomously the subscriber station MS can determine a predetermined time interval in which said IF measurement means IFMM is to carry out the field measurements.

It is also possible that the data transmission determining means DTDM does not evaluate a number of successive time intervals but uses for the power ratio evaluation a number of periodically occuring time slots. It is also possible that the DTDM means first evaluates a number of quite densely distributed time slots, i.e. a first, third, fifth and seventh time slot and thereafter only choses every third or fourth time slot to make sure that the estimation regarding the no-data transmission is indeed prevailing for the longer period of time, before the actual IF measurements are started. It is also possible that the DTDM means again evaluates time slots when the IFMM means already carries out the measurements in order to make sure that no data transmission has started in the meantime.

If said mobile communication system is a CDMA or WCDMA communication system, said predetermined number of time slots which are being evaluated with respect to the power ratio is in the range between 5 and 110 slots. If the mobile communication system is a TDMA or FDMA communication system, said predetermined number of time slots is in the range between 10 and 128 slots corresponding to roughly 10 complete data frames.

It is also possible, that the predetermined number of data frames or data slots corresponding to the time interval in which the measurements are to be carried out are communicated back to the network control means RNC for further processing. For example, if the subscriber station MS estimates that no-data transmission will take place for e.g. 10 data frames or data slots and the network control means RNC determines that actually data transmission is not planned for at least 15 data frames or data slots, an information can be passed to the subscriber station MS that the IF measurement can be carried on for another 5 data frames or data slots. Alternatively, if actually only 5 data frames or data slots are not used for a data transmission, the network control means RNC can pass an information to the subscriber station MS which indicates that the estimated time interval needs to be shortened.

**SECOND EMBODIMENT OF THE INVENTION**

The detection (estimation) of a predetermined time interval in which no-data transmission is directed to the subscriber station MS from the base transceiver station RBS by evaluating the power ratio is a particularly advantageous embodiment if a communication connection CC is already established between the mobile station MS and the network control means RNC. However, field measurements for a possible handover also need to be carried out if the mobile station is merely registered in the mobile communication system and only a signalling communication is established between the network and the mobile station MS. The detection of a no-data transmission period when only a signalling communication is present in a non-active mode of operation is explained below as a second embodiment of the invention.

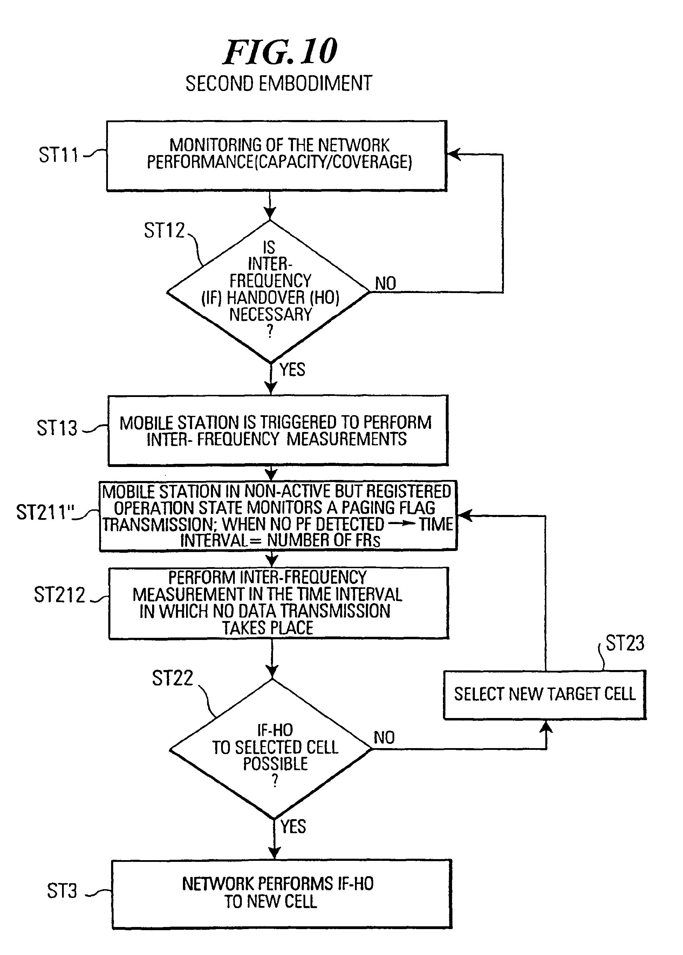

As shown in Fig. 10, in step ST211" the subscriber station MS is in a non-active but registered operation state and it is held in this state by a standby or non-active-mode operation means SOM. In such a situation at least a signalling communication is established between the subscriber station MS and the base transceiver station RBS. In such a situation, as explained above with reference to Fig. 1, a paging flag sending means PFSM of the network control means RNC can send a paging flag in order to indicate to the subscriber station MS a pending call.

According to the second embodiment of the invention the subscriber station MS can comprise a paging flag monitoring means PFMM which is activated when the subscriber station is in an non-active-mode of operation as commanded by the means SOM via the standby or non-active signal STB. In such a state the paging flag monitoring means PFMM monitors the transmission of a paging flag PF from the base transceiver station RBS in step ST211". When the paging flag monitoring means PFMM determines no transmission of a paging flag PF from the network, it communicates this via a paging flag detection signal PFDS to the data transmission determining means DTDM. Therefore, when the signalling communication is established and no paging flag PF is detected, the data transmission determining means DTDM will determine that a data transmission will not take place in a time interval corresponding to a predetermined number of time slots or data frames after the determination has been made. That is, the paging flag monitoring means monitors the signalling communication and if the paging flag is detected, it will suspend the inter-frequency measurements. However, if at a particular measurement time point no paging flag is detected, then the PFMM means estimates that for a time period corresponding to a plurality of time slots or data frames following said measurement time point no-data transmission will actually take place.

Therefore, in step ST212 the IFMM means performs the IF measurements in response to the control signal DTTS output by the DTDM means.

Furthermore, as explained above, the DTDM means as well as the PFMM means can start their operation in response to the generated or received (from the network) IFTS signal. However, it is also possible that the trigger signal IFTS is generated/received and only a small time period later the DTDM means and/or the PFMM means start operating.

In a CDMA or WCDMA communication system the predetermined number of data slots following the measurement time point regarding the paging flag can be between 5 and 110 data slots. If said mobile communication system is a TDMA or FDMA communication system, the predetermined number of data slots following the measurement time point can be in the range between 10 and 128.

It should also be noted that other information on the signalling channel in addition or instead of the paging flag can be used in order to make such a determination of a no-data transmission. If the respective information and/or the paging flag is not set, there is a high likelihood that no data transmission is planned for a certain time interval. Therefore, the IF measurements means IFMM can always perform inter-frequency measurements during a predetermined period of time in which no such data transmission is expected.

**THIRD EMBODIMENT OF THE INVENTION**

As explained with reference to Fig. 1, the data transmission between the network control means RNC and the subscriber station MS can also be carried out in a compressed mode of operation where transmission data in the data portion DP in at least one time slot is compressed such that an idle time interval IT is provided in said time slot, whereby no-data transmission occurs in said idle time interval. On the other hand, the subscriber station MS contains a compression-mode detection means CMDM detecting data transmission in said compressed mode.

According to the third embodiment of the invention the time interval in which said IF measurements are to be carried out corresponds to a predetermined number of time slots or data frames for which no-data transmission is detected (e.g. by evaluating the power or after the PFMM means has performed a check on the signalling communication regarding the transmission of a paging flag) plus a number of idle time portions IT of data frames or data slots where data transmission is carried out in a compressed mode. As shown in Fig. 7, the IF measurements means carrys out the IF measurement in response to the compressed mode trigger signal CMTS and the data transmission time interval signal DTTS.

For example, when the date transmission determining means DTDM has determined that no data transmission will take place for a number of time slots or data frames after the detection time point, IF measurements will be carried out in the time interval and - if a compressed mode of operation is selected for the data transmission - the IF measurements are also carried on in the idle time period IT of the compressed mode data slots.

**FOURTH EMBODIMENT OF THE INVENTION**

According to the fourth embodiment of the invention the IF measurements can also be carried out when the actual data transmission starts again. That is, first the DTDM means detects or estimates a predetermined time interval in which no-data transmission can be expected from the network control means RNC or the base transmitter station RBS. In order to carry out the measurements also in an additional time interval where a data transmission takes place from the base transceiver station RBS to the subscriber station MS, the data transmission determining means DTDM is further adapted to determine an additional time interval in which said base transceiver station RBS directs a data transmission to said subscriber station MS. Furthermore, the subscriber station MS contains a deletion means DEL for deleting data which arrives in this additional time interval which has been determined as a data-transmission period.

There are various possibilities how the renewed transmission of data can be detected by the data transmission detection means DTDM. For example, the DTDM means may continously monitor the power ratio of data symbols to pilot symbols and if the power ratio exceeds the determined threshold, the renewed data transmission is detected. In this case, the IF measurements are first carried out in the predetermined time interval (a number of time slots or data frames) and subsequently also in the additional time interval in which data transmission takes place, the data of which however is deleted by the deletion means DEL in the subscriber station MS. In this case, the deletion means DEL signals the IF measurment means IFMM an additional time interval by means of the additional time interval indication signal DTS.

## FIFTH EMBODIMENT OF THE INVENTION

The following combinations of the afore-mentioned embodiments are possible. It is possible to first carry out the IF measurements in a no-data transmission period, to continue the IF measurements when data transmission in compressed mode is detected and to further continue the measurements if also a data transmission is re-detected. In this case, the data transmission detection can be based on the power ratio determination or the paging flag determination.

Furthermore, it is also possible to start the IF measurements first in the compressed mode of operation, i.e. in the idle time intervals IT of the compressed data portions DP. If so, the data transmission determining means DTDM can determine the ratio of the power of the (compressed) data to the power of the pilot symbols (or the power of the control portion CP) and can determine that a number of time slots or frames after the evaluation time slot no-data transmission will take place when the power ratio falls below the predetermined power threshold.

It is also possible that first a predetermined number of frames on a signalling communication are used for the IF measurements and the measurements are continued if a paging flag is detected but the actual data transmission only takes place after a further time period. That is, normally, it is immediately assumed that a detection of the paging flag PF indicates a subsequent data transmission. However, there may be a delay until the actual data transmission starts and this time period can also be used for the IF measurements since there is no data transmission. Therefore, even after detecting the paging flag PF the data transmission determing means DTDM may evaluate the power ratio in a couple of time slots or data frames and once more estimate a number of time slots or data frames in which no-data transmission even after detection of a paging flag PF is estimated. Therefore, even after the detection of a paging flag PF the IF measurement may be carried on for a predetermined time interval.

## INDUSTRIAL APPLICABILITY

As explained above, according to the present invention the subscriber station MS autonomously monitors a connection (signalling a connection or communication connection) and estimates that no-data transmission is planned by the network control means or the base transmitter station for a predetermined time interval after the monitoring start time point of the connection.

Such a time interval determining procedure can be applied to any mobile communication system independent of the specific technical implementation of the mobile communication system.

Furthermore, it should be noted that the present invention is not limited to the examples and embodiments described herein. A skilled person can derive further embodiments on the basis of the teachings disclosed herein. Therefore, other modifications and implementations on the basis of the present disclosure and the claims are to be construed to fall under the scope of the attached claims.

As mentioned above, the invention may also comprise embodiments consisting of steps and/or features which have been separately described in the description or claimed in the claims.

Reference numerals in the claims only serve clarification purposes and do not limit the scope of protection.

## Claims

1. Subscriber station (MS) of a mobile communication system (GSM; WCDMA), wherein a signalling communication can be established between said subscriber station (MS) and a base transceiver station (RBS), the subscriber station (MS) including an inter-frequency IF measurement means (IFMM) adapted to perform IF measurements, **characterized by** a data transmission determining means (DTDM) adapted to determine a predetermined time interval in which the base transceiver station (RBS) will not direct to said subscriber station (MS) a data transmission by monitoring the transmission of an information on the signalling communication and determining if the information on the signalling communication is not set, wherein said IF measurement means (IFMM) is adapted to perform said IF measurements in said predetermined time interval.

2. Subscriber station (MS) according to claim 1, wherein the subscriber station (MS) is having a non-active operation mode in which the signalling communication is established and wherein the inter-frequency IF measurement means (IFMM) is adapted to perform the IF measurements in response to an IF measurement trigger signal (IFTS) and an IF handover request means (HORM) for generating said IF measurement trigger signal (IFTS) when it is determined (NEHO; MEHO) that transmission conditions in said mobile communication system necessitate an IF handover of said subscriber station (MS) wherein the information is a paging flag (PF) and the data transmission determining means (DTDM) is a paging flag monitoring means (PFMM) adapted to monitor the transmission of a paging flag (PF) from said base transceiver station (RBS) to said subscriber station (MS) in the non-active mode of operation, wherein, when said paging flag monitoring means (PFMM) determines no transmission of said paging flag (PF), the data transmission determining means (DTDM) determines that a data transmission will not take place in a time interval corresponding to a predetermined number of data frames or data slots after detecting said paging flag (PF).

3. Subscriber station (MS) of a mobile communication system (GSM; WCDMA), in which data transmissions are carried out between at least one base transceiver station (RBS) and said subscriber station (MS) via data frames (FR) having a control portion (CP) and a data portion (DP), including an inter-frequency IF measurement means (IFMM) adapted to perform IF measurements in response to an IF measurement trigger signal (IFTS) and an IF handover request means (HORM) for generating said IF measurement trigger signal (IFTS) when it is determined (NEHO; MEHO) that transmission conditions in said mobile communication system necessitate an IF handover of said subscriber station (MS); *characterized by* a data transmission determining means (DTDM) adapted to determine in a data frame received from the base transceiver station (RBS) the power ratio of the information contained in the data portion (DP) to the information contained in the control portion (CP) and to determine that no data transmission will take place in a time interval corresponding to a predetermined number of data frames or data slots following the output of said IF measurement trigger signal, if said power ratio is below a predefined power ratio, wherein said IF measurement means (IFMM) is adapted to perform said IF measurements in said predetermined time interval.

4. Subscriber station (MS) according to claim 1,
*characterized in that*
said data transmission determining means (DTDM) is adapted to start determining said predetermined time interval in response to an IF measurement trigger signal (IFTS).

5. Subscriber station (MS) according to claim 4,
*characterized in that*
said IF measurement trigger signal (IFTS) is generated by an IF handover request means (HORM) when said IF handover request means (HORM) determines (NEHO; MEHO) that transmission conditions in said mobile communication system necessitate an IF handover of said subscriber station (MS).

6. Subscriber station (MS) according to claim 5,
*characterized in that*
said IF handover request means (HORM) is located in said subscriber station (MS) and is adapted to output said IF measurement trigger signal (IFTS) in response to determining a mobile-evaluated handover (MEHO).

7. Subscriber station (MS) according to claim 4,
*characterized in that*
a data transmission between said base transceiver stations (RBS) and said subscriber station (MS) is carried out by transmitting data frames (FR) wherein said predetermined time interval corresponds to at least one data frame.

8. Subscriber station (MS) according to claim 7,
*characterized in* that
said transmission frames (FR) consist of a control portion (CP) and a data portion (DP), wherein said data transmission determining means (DTDM) is adapted to determine the power ratio of the information contained in the data portion (DP) to the information contained in the control portion (CP) and comprises power estimation means adapted to determine that no data transmission will take place in a time interval corresponding to a predetermined number of data slots or data frames following the output of said IF measurement trigger signal, if said power ratio is below a predefined power ratio.

9. Subscriber station (MS) according to claim 4,
*characterized by*
an active-mode operation means (SOM) adapted to hold the subscriber station (MS) in a non-active operation mode in which at least a signalling communication is established between said subscriber station (MS) and said base transceiver station (RBS), and a paging flag monitoring means (PFMM) adapted to monitor the transmission of a paging flag (PF) from said base transceiver station (RBS) to said subscriber station (MS), wherein, when said paging flag monitoring means (PFMM) determines no transmission of said paging flag (PF), said data transmission determining means (DTDM) determines that a data transmission will not take place in a time interval corresponding to a predetermined number of data slots after detecting said paging flag (PF).

10. Subscriber station (MS) according to claim 8 or 9,
*characterized in that*
said mobile communication system is a CDMA or WCDMA communication system and said predetermined number of data slots is in the range between 5 and 110 slots.

11. Subscriber station (MS) according to claim 8 or 9,
*characterized in that*
said mobile communication system is a TDMA or FDMA communication system and said predetermined number of data slots is in the range between 10 and 128 slots.

12. Subscriber station (MS) according to claim 8 or 9,
*characterized in* that
said predetermined number of data slots is communicated to said subscriber station (MS) from a network control means (RNC).

13. Subscriber station (MS) according to claim 8 or 9,
*characterized in that*
said data transmission between said subscriber station (MS) and said base transceiver station (RBS) is carried out in a compressed mode by compression of transmission data in said data portion (DP) in at least one time slot providing an idle time interval in said time slot where no data transmission occurs, wherein said subscriber station (MS) contains a compression-mode determining means (CMDM) for determining data transmission in said compressed mode and wherein said predetermined time interval corresponds to a number of data frames where no data transmission takes place and a number of idle time portions (TT) of data slots where data transmission is carried in a compressed mode.

14. Subscriber station (MS) according to claim 1 or 13,
*characterized in that*
said data transmission determining means (DTDM) is further adapted to determine an additional time interval in which said base transceiver station (RBS) directs a data transmission to said subscriber station (MS).

15. Subscriber station (MS) according to claim 4,
*characterized in that*
said IF measurement means (IFMM) also carries out measurements in said additional time interval where a data transmission takes place from said base transceiver station (RBS) wherein said subscriber station (MS) contains a deletion means (DEL) for deleting the data which arrives in said additional time interval.

16. Method for performing inter-frequency IF measurements (ST21; ST21"; ST21"") in a subscriber station (MS) of a mobile communication system (GSM; WCDMA),
*characterized by the steps of* establishing a signalling communication between said subscriber station (MS) and a base transceiver station (RBS); determining (ST211; ST211'; ST211") a predetermined time interval in which the base transceiver station (RBS) will not direct to said subscriber station (MS) a data transmission by monitoring the transmission of an information on the signalling communication and determining if the information on the signalling communication is not set; and performing (ST212) said IF measurements in said predetermined time interval.

17. Method according to claim 16,
*characterized in that*
said determining of said predetermined time interval is performed in response (ST13) to an IF measurement trigger signal (IFTS).

18. Method according to claim 17,
*characterized in that*

it is determined (ST11, ST21) whether transmission conditions in said mobile communication system necessitate an IF handover of said subscriber station (MS) and said IF measurement trigger signal (IFTS) is generated when an IF handover is necessary (NEHO; MEHO).

19. Method according to claim 18,
*characterized* in that
said determining (NEHO) whether said transmission conditions necessitate (ST12) an IF handover of said subscriber station (MS) is carried out (ST11) by a network control means (RNC) and said IF measurement trigger signal (IFTS) is transmitted (ST13) from said network control means (RNC) of said mobile communication system to said subscriber station (MS) via a base transceiver station (RBS).

20. Method according to claim 18,
*characterized in that*
said determining (MEHO) whether said transmission conditions necessitate (ST12) an IF handover of said subscriber station (MS) is carried out (ST11) by said subscriber station (MS) and said IF measurement trigger signal (IFTS) is generated (ST13) by said subscriber station (MS).

21. Method according to claim 17,
*characterized in that*
a data transmission between said base transceiver stations (RBS) and said subscriber station (MS) is carried out by transmitting data frames (FR), wherein said predetermined time interval for which it is determined whether a data transmission will be performed or not is a time interval corresponding to at least one data frame or data slot.

22. Method according to claim 21,
*characterized in that*
said transmission frames (FR) consist of a control portion (CP) and a data portion (DP), wherein the power ratio of the information contained in the data portion (DP) to the information contained in the control portion (CP) is determined (ST211') and it is determined (ST211') that no data transmission will take place in a time interval corresponding to a predetermined number of data frames or data slots following the output of said IF measurement trigger signal, if said power ratio is below a predefined power ratio.

23. Method according to claim 17,
*characterized in that*
in a non-active operation mode of said subscriber station (MS) in which at least a signalling communication is established between said subscriber station (MS) and said base transceiver station (RBS), a transmission of a paging flag (PF) from said base transceiver station (RBS) to said subscriber station (MS) is monitored (ST211") in said subscriber station (MS), wherein when no transmission of said paging flag (PF) is detected, is is determined (ST211'') that a data transmission will not take place in a time interval corresponding to a predetermined number of data frames or data slots after detecting said paging flag (PF).

24. Method according to claim 22 or 23,
**characterized in that**
said mobile communication system is a CDMA or WCDMA communication system and said predetermined number of data slots is in the range between 5 and 110 slots.

25. Method according to claim 22 or 23,
*characterized in that*
said mobile communication system is a TDMA or FDMA communication system and said predetermined number of data slots is in the range between 10 and 128 slots.

26. Method according to claim 22 or 23,
*characterized in that*
said predetermined number of data slots is communicated to said subscriber station (MS) from said network control means (RNC).

27. Method according to claim 22 or 23,
*characterized in that*
in a compressed mode of operation data in said data portion (DP) in at least one time slot of a data frame is compressed (ST21') in a network control means (RNC) providing an idle time interval (IT) in said time slot where no data transmission occurs, wherein a data transmission in said compressed mode is detected (ST21") in said subscriber station (MS) and wherein said predetermined time interval corresponds to a number of data frames or time slots where no data transmission takes place (ST211; ST211') as well as a number of idle time portions of data frames where data transmission is carried in a compressed mode (ST21").

**28.** Method according to claim 16,
*characterized in that*
an additional time interval is determined in which said base transceiver station (RBS) directs a data transmission to said subscriber station (MS).

**29.** Method according to claim 28,
*characterized in that*
said IF measurements are also carried out in said additional time interval where a data transmission takes place from said base transceiver station (RBS) wherein the data which arrives in said additional time interval from said network control means (RNC) is discarded in said subscriber station (MS).

**30.** Method for performing inter-frequency IF measurements (ST21; ST21" ; ST21"") in a subscriber station (MS) of a mobile communication system (GSM; WCDMA),
*characterized by the steps of*
carrying out data transmissions between at least one base transceiver station (RBS) and said subscriber station (MS) via data frames (FR) having a control portion (CP) and a data portion (DP), the subscriber station (MS) including an inter-frequency (IF) measurement means (IFMM) performing IF measurements in response to an IF measurement trigger signal (IFTS) and an IF handover request means (HORM) for generating said IF measurement trigger signal (IFTS) when it is determined (NEHO; MEHO) that transmission;conditions in said mobile communication system necessitate an IF handover of said subscriber station (MS); wherein a data transmission determining means (DTDM) determines in a data frame received from the base transceiver station (RBS) the power ratio of the information contained in the data portion (DP) to the information contained in the control portion (CP) and determines that no data transmission will take place in a time interval corresponding to a predetermined number of data frames or data slots following the output of said IF measurement trigger signal, if said power ratio is below a predefined power ratio, wherein said IF measurement means (IFMM) performs said IF measurements in said predetermined time interval.

**31.** A mobile communication system comprising at least one subscriber station (MS) according to one or more of claims 1-15.

**32.** System according to claim 31,
*characterized by*
a network control means (RNC) including said IF handover request means (HORM) adapted to transmit said IF measurement trigger signal (IFTS) to said subscriber station (MS) via a base transceiver station (RBS) in response to determining a network-evaluated handover (NEHO).

**33.** System according to claim 31,
*characterized in that*
said network control means (RNC) is adapted to communicate a predetermined number of data slots to said subscriber station (MS) as said time interval.

**Patentansprüche**

**1.** Teilnehmerstation (MS) eines mobilen Kommunikationssystems (GSM; WCDMA), wobei eine Signalisierungskoinmunikation zwischen der Teilnehmerstation (MS) und einer Basis-Transceiverstation (RBS) hergestellt werden kann, die Teilnehmerstation (MS) eine Interfrequenz-IF-Messungseinrichtung (IFMM) umfasst, die ausgelegt ist, IF-Messungen durchzuführen, *gekennzeichnet* **durch** eine Datenübertragungs-Bestimmungseinrichtung (DTDM), die ausgelegt ist, ein vorgegebenes Zeitintervall, in dem die Basis-Transceiverstation (RBS) keine Datenübertragung zu der Teilnehmerstation (MS) leiten wird, zu bestimmen, indem die Übertragung einer Information auf der Signalisierungskommunikation überwacht und ermittelt wird, ob die Information auf der Signalisierungskommunikation nicht gesetzt ist, wobei die IF-Messungseinrichtung (IFMM) ausgelegt ist, die IF-Messungen in dem vorgegebenen Zeitintervall durchzuführen.

**2.** Teilnehmerstation (MS) nach Anspruch 1, wobei die Teilnehmerstation (MS) einen nicht-aktiven Betriebsmodus aufweist, in dem die Signalisierungskommunikatian hergestellt ist, und wobei die Interfrequenz-IF-Messungseinrichtung (IFMM) ausgelegt ist, die IF-Messungen in Reaktion auf ein Triggersignal zur IF-Messung (IFTS) durchzuführen, und eine IF-Handover-Anforderungseinrichtung (HORM) aufweist, um das Triggersignal zur IF-Messung (IFTS) zu generieren, wenn bestimmt worden ist (NEHO; MEHO), dass Übertragungbedingungen in dem mobilen Kommunikationssystem ein IF-Handover der Teilnehmerstation (MS) erforderlich machen, wobei die Information ein Funkruf-Flag (PF) ist, und die Datenübertragungs-Bestimmungseinrichtung (DTDM) eine Funkruf-Flag-Überwachungseinrichtung (PFMM) ist, die ausgelegt ist, die Übertragung eines Funkruf-Flags (PF) von der Basis-Transceiverstation (RBS) zu der Teilnehmerstation (MS) in dem nicht-aktiven Betriebsmodus zu überwachen, wobei, wenn die Funkruf-Flag-Überwachungseinrichtung (PFMM) keine Übertragung des Funkruf-Flags (PF) ermittelt, die Datenübertragungs-Bestimmungseinrichtung (DTDM) bestimmt, dass in einem Zeitintervall, das einer vorgegebenen Anzahl von Datenübertragungsblöcken oder Datenschlitzen nach dem Erfassen des Funkruf-Flags (PF) entspricht, keine Datenübertragung stattfinden wird.

**3.** Teilnehmerstation (MS) eines mobilen Kommunikationssystems (GSM; WCDMA), in dem Datenübertragungen zwischen wenigstens einer Basis-Transceiverstation (RBS) und der Teilnehmerstation (MS) über Datenübertragungsblöcke (FR) ausgeführt werden, die einen Steuerabschnitt (CP) und einen Datenabschnitt (DP) aufweisen, die eine Interfrequenz-IF-Messungseinrichtung (IFMM), die ausgelegt ist, IF-Measungen in Reaktion auf ein Triggersignal zur IF-Messung (IFTS) durchzuführen, und eine IF-Handover-Anforderungseinrichtung (HORM) umfasst, um das Triggersignal zur IF-Messung (IFTS) zu generieren, wenn bestimmt worden ist (NEHO; MEHO), dass Übertragungsbedingungen in dem mobilen Kommunikationssystem ein IF-Handover der Teilnehmerstation (MS) erforderlich machen; **gekennzeichnet durch** eine Datenübertragungs-Bestimmungseinrichtung (DTDM), die ausgelegt ist, in einem Datenübertragungsblock, der von der Basis-Transceiverstation (RBS) empfangen wurde, das Leistungsverhältnis der Informationen, die in dem Datenabschnitt (DP) enthalten sind, zu den Informationen, die in dem Steuerabschnitt (CP) enthalten sind, zu bestimmen, und um zu bestimmen, dass keine Datenübertragung in einem Zeitintervall stattfinden wird, das einer vorgegebenen Anzahl von Datenübertragungsblöcken oder Datenschlitzen entspricht, die auf die Ausgabe des Triggersignals zur IF-Messung folgen, wenn das Leistungsverhältnis unter einem vordefinierten Leistungsverhältnis liegt, wobei die IF-Messungseinrichtung (IFMM) ausgelegt ist, die IF-Messungen in dem vorgegebenen Zeitintervall durchzuführen.

**4.** Teilnehmerstation (MS) nach Anspruch 1,
**dadurch *gekennzeichnet, dass***
die Datenübertragungs-Bestimmungseinrichtung (DTDM) ausgelegt ist, die Bestimmung des vorgegebenen Zeitintervalls in Reaktion auf ein Triggersignal zur IF-Messung (IFTS) zu starten.

**5.** Teilnehmerstation (MS) nach Anspruch 4,
**dadurch *gekennzeichnet, dass***
das Triggersignal zur IF-Messung (IFTS) durch eine IF-Handover-Anforderungseinrichtung (HORM) generiert wird, wenn die IF-Handover-Anforderungseinrichtung (HORM) bestimmt (NEHO; MEHO), dass Übertragungsbedingungen in dem mobilen Kommunikationssystem ein IF-Handover der Teilnehmerstation (MS) erforderlich machen.

**6.** Teilnehmerstation (MS) nach Anspruch 5,
**dadurch *gekennzeichnet, dass***
sich die IF-Handover-Anforderungseinrichtung (HORM) in der Teilnehmerstation (MS) befindet und ausgelegt ist, das Triggersignal zur IF-Messung (IFTS) in Reaktion auf die Bestimmung eines mobilstationsausgewerteten Handovers (MEHO) auszugeben.

**7.** Teilnehmerstation (MS) nach Anspruch 4,
**dadurch *gekennzeichnet, dass***
eine Datenübertragung zwischen den Basis-Transceiverstationen (RBS) und der Teilnehmerstation (MS) durch Übertragen von Datenübertragungsblöcken (FR) ausgeführt wird, wobei das vorgegebene Zeitintervall wenigstens einem Datenübertragungsblock entspricht.

**8.** Teilnehmerstation (MS) nach Anspruch 7,
**dadurch *gekennzeichnet, dass***
die Übertragungsblöcke (FR) aus einem Steuerabschnitt (CP) und einem Datenabschnitt (DP) bestehen, wobei die Datenübertragungs-Bestimmungseinrichtung (DTDM) ausgelegt ist, das Leistungsverhältnis der Informationen, die in dem Datenabschnitt (DP) enthalten sind, zu den Informationen, die in dem Steuerabschnitt (CP) enthalten sind, zu bestimmen, und eine Leistungsschätzungseinrichtung umfasst, die ausgelegt ist, zu bestimmen, das keine Datenübertragung in einem Zeitintervall stattfinden wird, das einer vorgegebenen Anzahl von Datenschlitzen oder Datenübertragungsblöcken entspricht, die nach der Ausgabe des Triggersignals zur IF-Messung folgen, wenn das Leistungsverhältnis unter einem vorgegebenen Leistungsverhältnis liegt.

9. Teilnehmerstation (MS) nach Anspruch 4,
*gekennzeichnet durch*
eine Aktivmodus-Betriebseinrichtung (SOM), die ausgelegt ist, die Teilnehmerstation (MS) in einem nicht-aktiven, Betriebsmodus zu halten, in dem wenigstens eine Signalisierungskommunikation zwischen der Teilnehmerstation (MS) und der Basis-Transceiverstation (RBS) hergestellt ist, und eine Funkruf-Flag-Überwachungseinrichtung (PFMM), die ausgelegt ist, die Übertragung eines Funkruf-Flags (PF) von der Basis-Transceiverstation (RBS) zu der Teilnehmerstation (MS) zu überwachen, wobei, wenn die Funkruf-Flag-Überwachungseinrichtung (PFMM) keine Übertragung des Funkruf-Flags (PF) ermittelt, die Datenübertragungs-Bestimmungseinrichtung (DTDM) bestimmt, dass in einem Zeitintervall, das einer vorgegebenen Anzahl von Datenschlitzen nach dem Erfassen des Funkruf-Flags (PF) entspricht, keine Datenübertragung stattfinden wird.

10. Teilnehmerstation (MS) nach Anspruch 8 oder 9,
*dadurch gekennzeichnet, dass*
das mobile Kommunikationssystem ein CDMA- oder WCDMA-Kommunikationssystem ist, und die vorgegebene Anzahl von Datenschlitzen in dem Bereich zwischen 5 und 110 Schlitzen liegt.

11. Teilnehmerstation (MS) nach Anspruch 8 oder 9,
*dadurch gekennzeichnet, dass*
das mobile Kommunikationssystem ein TDMA- oder FDMA-Kommunikationssystem ist, und die vorgegebene Anzahl von Datenschlitzen in dem Bereich zwischen 10 und 128 Schlitzen liegt.

12. Teilnehmerstation (MS) nach Anspruch 8 oder 9,
**dadurch gekennzeichnet, dass**
die vorgegebene Anzahl von Datenschlitzen an die Teilnehmerstation (MS) von einer Netzwerksteuereinrichtung (RNC) übermittelt wird.

13. Teilnehmerstation (MS) nach Anspruch 8 oder 9,
*dadurch gekennzeichnet, dass*
die Datenübertragung zwischen der Teilnehmerstation (MS) und der Basis-Transceiverstation (RBS) in einem komprimierten Modus durch Komprimieren von Übertragungsdaten in dem Datenabschnitt (DP) in wenigstens einem Zeitschlitz ausgeführt wird, wodurch ein Leerlaufzeitintervall in dem Zeitschlitz bereitgestellt wird, in dem keine Datenübertragung erfolgt, wobei die Teilnehmerstation (MS) eine Kompressionsmodus-Bestimmungseinrichtung (CMDM) zum Bestimmen einer Datenübertragung in dem komprimierten Modus enthält, und wobei das vorgegebene Zeitintervall einer Anzahl von Datenübertragungsblöcken, in denen keine Datenübertragung stattfindet, und einer Anzahl von Leerlaufzeitabschnitten (IT) von Datenschlitzen, in denen die Datenübertragung in einem komprimierten Modus ausgeführt wird, entspricht.

14. Teilnehmerstation (MS) nach Anspruch 1 oder 13,
*dadurch gekennzeichnet, dass*
die Datenübertragungs-Bestimmungseinrichtung (DTDM) des Weiteren ausgelegt ist, ein zusätzliches Zeitintervall zu bestimmen, in dem eine Basis-Transceiverstation (RBS) eine Datenübertragung zu der Teilnehmerstation (MS) leitet.

15. Teilnehmerstation (MS) nach Anspruch 4,
*dadurch gekennzeichnet, dass*
die IF-Messungseinrichtung (IFMM) auch Messungen in dem zusätzlichen Zeitintervall ausführt, in dem eine Datenübertragung von der Basis-Transceiverstation (RBS) stattfindet, wobei die Teilnehmerstation (MS) eine Löscheinrichtung (DEL) zum Löschen der Daten enthält, die in dem zusätzlichen Zeitintervall ankommen.

16. Verfahren zum Durchführen von Interfrequenz- IF Messungen (ST21; ST21"; ST21"") in einer Teilnehmerstation (MS) eines mobilen Kommunikationssystems (GSM; WCDMA), *gekennzeichnet durch* die Schritte des Herstellens einer Signalisierungskommunikation zwischen der Teilnehmerstation (MS) und einer Basis-Transceiverstation (RBS); des Bestimmens (ST211; ST211'; ST211'') eines vorgegebenen Zeitintervalls, in dem die Basis-Transceiverstation (RBS) keine Datenübertragung zu der Teilnehmerstation (MS) leiten wird, indem die Übertragung einer Information auf der Signalisierungskommunikation überwacht und bestimmt wird, ob die Information auf der Signalisierungskommunikation nicht gesetzt ist; und des Durchführens (ST212) der IF-Messungen in dem vorgegebenen Zeitintervall.

17. Verfahren nach Anspruch 16, *dadurch gekennzeichnet, dass*
das Bestimmen des vorgegebenen Zeitintervalls in Reaktion (ST13) auf ein Triggersignal zur IF-Messung (IFTS) durchgeführt wird.

18. Verfahren nach Anspruch 17,
*dadurch gekennzeichnet, dass*
bestimmt wird (ST11, ST21), ob Übertragungsbedingungen in dem mobilen Kommunikationssystem ein IF-Handover der Teilnehmerstation (MS) erforderlich machen und das Triggersignal zur IF-Messung (IFTS) generiert wird, wenn ein IF-Handover notwendig ist (NEHO; MEHO).

19. Verfahren nach Anspruch 18,
*dadurch gekennzeichnet, dass*
das Bestimmen (NEHO), ob die Übertragungsbedingungen ein IF-Handover der Teilnehmerstation (MS) erforderlich machen (ST12), von einer Netzwerksteuereinrichtung (RNC) ausgeführt wird (ST11), und das Triggersignal zur IF-Messung (IFTS) von der Netzwerksteuereinrichtung (RNC) des mobilen Kommunikationssystems zu der Teilnehmerstation (MS) über eine Basis-Transceiverstation (RBS) übertragen wird.

20. Verfahren nach Anspruch 18,
*dadurch gekennzeichnet, dass*
das Bestimmen (MEHO), ob die Übertragungsbedingungen ein IF-Handover der Teilnehmerstation (MS) erforderlich machen (ST12), von der Teilnehmerstation (MS) ausgeführt wird (ST11), und das Triggersignal zur IF-Messung (IFTS) von der Teilnehmerstation (MS) generiert (ST13) wird.

21. Verfahren nach Anspruch 17,
*dadurch gekennzeichnet, dass*
eine Datenübertragung zwischen den Basis-Transceiverstationen (RBS) und der Teilnehmerstation (MS) durch Übertragen von Datenübertragungsblöcken (FR) ausgeführt wird, wobei das vorgegebene Zeitintervall, für welches bestimmt wird, ob eine Datenübertragung durchgeführt wird oder nicht, ein zeitintervall ist, das wenigstens einem Datenübertragungsblock oder Datenschlitz entspricht.

22. Verfahren nach Anspruch 21,
*dadurch gekennzeichnet, dass*
die Übertragungsblöcke (FR) aus einem Steuerabschnitt (CP) und einem Datenabschnitt (DP) bestehen, wobei das Leistungsverhältnis der in dem Datenabschnitt (DP) enthaltenen Informationen zu den in dem Steuerabschnitt (CP) enthaltenen Informationen bestimmt wird (ST211') und bestimmt wird (ST211'), dass keine Datenübertragung in einem Zeitintervall stattfinden wird, das einer vorgegebenen Anzahl von Datenübertragungsblöcken oder Datenschlitzen entspricht, die auf die Ausgabe des IF-Messungs-Triggersignals folgen, wenn das Leistungsverhältnis unter einem vorgegebenen Leistungsverhältnis liegt.

23. Verfahren nach Anspruch 17, *dadurch gekennzeichnet, dass*
in einem nicht-aktiven Betriebsmodus der Teilnehmerstation (MS), in dem wenigstens eine Signalisierungskommunikation zwischen der Teilnehmerstation (MS) und der Basis-Transceiverstation (RBS) hergestellt ist, eine Übertragung eines Funkruf-Flags (PF) von der Basis-Transceiverstation (RBS) zu der Teilnehmerstation (MS) in der Teilnehmerstation (MS) überwacht wird (ST211''), wobei, wenn keine Übertragung des Funkruf-Flags (PF) erfasst wird, bestimmt wird (ST211''), dass keine Datenübertragung in einem Zeitintervall, das einer vorgegebenen Anzahl von Datenübertragungsblöcken oder Datenschlitzen nach dem Erfassen des Furikruf-Flags (PF) entspricht, stattfinden wird.

24. Verfahren nach Anspruch 22 oder 23,
*dadurch gekennzeichnet, dass*
das mobile Kommunikationssystem ein CDMA- oder WCDMA-Kommunikationssystem ist, und die vorgegebene Anzahl von Datenschlitzen in dem Bereich zwischen 5 und 100 Schlitzen liegt.

**25.** verfahren nach Anspruch 22 oder 23,
***dadurch gekennzeichnet, dass***
das mobile Kommunikationssystem ein TDMA- oder FDMA-Kommunikationssystem ist, und die vorgegebene Anzahl von Datenschlitzen in dem Bereich zwischen 10 und 128 Schlitzen liegt.

**26.** Verfahren nach Anspruch 22 oder 23, ***dadurch gekennzeichnet, dass***
die vorgegebene Anzahl von Datenschlitzen von der Netzwerksteuereinrichtung (RNC) an die Teilnehmerstation (MS) übermittelt wird.

**27.** Verfahren nach Anspruch 22 oder 23,
***dadurch gekennzeichnet, dass***
in einem komprimierten Betriebsmodus Daten in dem Datenabschnitt (DP) in wenigstens einem Zeitschlitz eines Datenübertragungsblocks in einer Netzwerksteuereinrichtung (RNC) komprimiert werden (ST21'), wodurch ein Leerlaufzeitintervall (IT) in dem Zeitschlitz bereitgestellt wird, in dem keine Datenübertragung erfolgt, wobei eine Datenübertragung in dem komprimierten Modus in der Teilnehmerstation (MS) erfasst wird (ST21''), und wobei das vorgegebene Zeitintervall einer Anzahl von Datenübertragungsblöcken oder Zeitschlitzen, in denen keine Datenübertragung stattfindet (ST211; ST211') sowie einer Anzahl von Leerlaufzeitabschnitten von Datenübertragungsblöcken entspricht, in denen eine Datenübertragung in einem komprimierten Modus ausgeführt wird (ST21'').

**28.** Verfahren nach Anspruch 16,
***dadurch gekennzeichnet, dass***
ein zusätzliches Zeitintervall bestimmt wird, in dem die Basis-Transceiverstation (RBS) eine Datenübertragung zu der Teilnehmerstation (MS) leitet.

**29.** Verfahren nach Anspruch 28, ***dadurch gekennzeichnet, dass***
die IF-Messungen auch in dem zusätzlichen Zeitintervall ausgeführt werden, in dem eine Datenübertragung von der Basis-Transceiverstation (RBS) stattfindet, wobei die Daten, die in dem zusätzlichen Zeitintervall von der Netzwerksteuereinrichtung (RNC) ankommen, in der Teilnehmerstation (MS) verworfen werden.

**30.** Verfahren zum Durchführen von Interfrequenz-IF-Messungen (ST21; ST21''; ST21'''') in einer Teilnehmerstation (MS) eines mobilen Kommunikationssystems (GSM; WCDMA),
***gekennzeichnet* durch** die Schritte des Ausführens von Datenübertragungen zwischen wenigstens einer Basis-Transceiverstation (RBS) und der Teilnehmerstation (MS) über Datenübertragungsblöcke (FR) mit einem Steuerabschnitt (CP) und einem Datenabschnitt (DP), wobei die Teilnehmerstation (MS) eine Interfrequenz-(IF) Messungseinrichtung (IFMM) aufweist, die IF-Messungen in Reaktion auf ein Triggersignal zur IF-Messung (IFTS) durchführt, und eine IF-Handover-Anforderungseinrichtung (HORM), um das Triggersignal zur IF-Messung (IFTS) zu generieren, wenn bestimmt wird (NEHO; MEHO), dass Übertragungsbedingungen in dem mobilen Kommunikationssystem ein IF-Handover der Teilnehmerstation (MS) erforderlich machen; wobei eine Datenübertragungs-Bestimmungseinrichtung (DTDM) in einem Datenübertragungsblock, der von der Basis-Transceiverstation (RBS) empfangen wurde, das Leistungsverhältnis der in dem Datenabschnitt (DP) enthaltenen Informationen zu den in dem Steuerabschnitt , (CP) enthaltenen Informationen bestimmt, und bestimmt, dass keine Datenübertragung in einem Zeitintervall stattfinden wird, das einer vorgegebenen Anzahl von Datenübertragungsblöcken oder Datenschlitzen nach der Ausgabe des Triggersignals zur IF-Messung entspricht, wenn das Leistungsverhältnis unter einem vorgegebenen Leistungsverhältnis liegt, wobei die IF-Messungseinrichtung (IFMM) die IF-Messungen in dem vorgegebenen Zeitintervall durchführt.

**31.** Mobiles Kommunikationssystem, das wenigstens eine Teilnehmerstation (MS) gemäß einem oder mehreren der Ansprüche 1 - 15 umfasst.

**32.** System nach Anspruch 31,
***gekennzeichnet durch***
eine Netzwerksteuereinrichtung (RNC) mit der IF-Handover-Anforderungseinrichtung (HORM), die ausgelegt ist, das Triggersignal zur IF-Messung (IFTS) zu der Teilnehmerstation (MS) über eine Basis-Transceiverstation (RBS) in Reaktion auf das Bestimmen eines netzwerkausgewerteten Handovers (NEHO) zu übertragen.

**33.** System nach Anspruch 31,
***dadurch gekennzeichnet, dass***
die Netzwerksteuereinrichtung (RNC) ausgelegt ist, eine vorgegebene Anzahl von Datenschlitzen zu der Teilnehmerstation (MS) als das Zeitintervall zu übermitteln.

**Revendications**

1. Station d'abonné (MS) d'un système de communication mobile (GSM, WCDMA) dans laquelle une communication de signalisation peut être établie entre ladite station d'abonné (MS) et une station émettrice-réceptrice de base (RBS), la station d'abonné (MS) comportant un moyen de mesurage entre fréquences IF (IFMM) permettant d'effectuer des mesurages IF,
   *caractérisée par*
   un moyen de détermination de transmission de données (DTDM) permettant de spécifier un intervalle temporel prédéterminé durant lequel la station émettrice-réceptrice de base (RBS) ne transmet pas de données vers ladite station d'abonné (MS) en surveillant la transmission d'une information dans la communication de signalisation et en déterminant si l'information de la communication de signalisation n'est pas activée, dans laquelle ledit moyen de mesurage IF (IFMM) permet d'effectuer lesdits mesurages IF durant ledit intervalle temporel prédéterminé.

2. Station d'abonné (MS) selon la revendication 1 dans laquelle la station d'abonné (MS) comporte un mode de fonctionnement inactif, dans lequel la communication de signalisation est établie, et dans laquelle le moyen de mesurage entre fréquences IF (IFMM) permet d'effectuer des mesurages IF en réponse à un signal de déclenchement de mesurage IF (IFTS), ainsi qu'un un moyen de demande de transfert IF (HORM) pour générer ledit signal de déclenchement de mesurage IF (IFTS) lorsqu'il est déterminé (NEHO, MEHO) que les conditions de transmission dans ledit système de communication mobile nécessitent un transfert IF de ladite station d'abonné (MS), dans laquelle l'information est un drapeau de pagination (PF) et le moyen de détermination de transmission de données (DTDM) est un moyen de surveillance de drapeau de pagination (PFMM) permettant de surveiller la transmission d'un drapeau de pagination (PF) depuis ladite station émettrice-réceptrice de base (RBS) vers ladite station d'abonné (MS) en mode de fonctionnement inactif, dans laquelle, lorsque ledit moyen de surveillance de drapeau de pagination (PFMM) ne détermine aucune transmission dudit drapeau de pagination (PF), le moyen de détermination de transmission de données (DTDM) détermine qu'une transmission de données n'aura pas lieu dans un intervalle temporel correspondant à un nombre prédéterminé de trames de données ou de créneaux de données après la détection dudit drapeau de pagination (PF).

3. Station d'abonné (MS) d'un système de communication mobile (GSM, WCDMA), dans laquelle des transmissions de données sont effectuées entre au moins une station émettrice-réceptrice de base (RBS) et ladite station d'abonné (MS) via des trames de données (FR) comportant une section de contrôle (CP) et une section de données (DP), et dans laquelle un moyen de mesurage entre fréquences IF (IFMM) permettant d'effectuer des mesurages IF en réponse à un signal de déclenchement de mesurage entre fréquences (IFTS) et un moyen de demande de transfert IF (HORM) pour générer ledit signal de déclenchement de mesurage IF (IFTS) lorsqu'il est déterminé (NEHO, MEHO) que les conditions de transmission dans ledit système de communication mobile nécessitent un transfert IF de ladite station d'abonné (MS),
   *caractérisée par*
   un moyen de détermination de transmission de données (DTDM) permettant de déterminer, dans une trame de données reçue depuis la station émettrice-réceptrice de base (RBS), le rapport de puissance de l'information contenue dans la section de données (DP) par l'information contenue dans la section de contrôle (CP) et de déterminer qu'aucune transmission de données n'aura lieu durant un intervalle temporel correspondant à un nombre prédéterminé de trames de données ou de créneaux de données après l'envoi dudit signal de déclenchement de mesurage IF, cela si ledit rapport de puissance est inférieur à un rapport de puissance prédéterminé, dans laquelle ledit moyen de mesurage IF (IFMM) permet d'effectuer lesdits mesurages IF durant ledit intervalle temporel prédéterminé.

4. Station d'abonné (MS) selon la revendication 1
   *caractérisée en ce que*
   ledit moyen de détermination de transmission de données (DTDM) permet de lancer l'identification dudit intervalle temporel prédéterminé en réponse à un signal de déclenchement de mesurage IF (IFTS).

5. Station d'abonné (MS) selon la revendication 4
   *caractérisée en ce que*
   ledit signal de déclenchement de mesurage IF (IFTS) est généré par un moyen de demande de transfert IF (HORM) lorsque ledit moyen de demande de transfert IF (HORM) détermine (NEHO, MEHO) que les conditions de transmission dans ledit système de communication mobile nécessitent un transfert IF de ladite station d'abonné (MS).

**6.** Station d'abonné (MS) selon la revendication 5
***caractérisée en ce que***
ledit moyen de demande de transfert IF (HORM) est situé dans ladite station d'abonné (MS) et permet d'envoyer ledit signal de déclenchement de mesurage IF (IFTS) en réponse à la détermination d'un transfert à évaluation mobile (MEHO).

**7.** Station d'abonné (MS) selon la revendication 4
***caractérisée en ce que***
une transmission de données entre ladite station émettrice-réceptrice de base (RBS) et ladite station d'abonné (MS) est effectuée en transmettant des trames de données (FR), dans laquelle ledit intervalle temporel prédéterminé correspond à au moins une trame de données.

**8.** Station d'abonné (MS) selon la revendication 7
***caractérisée en ce que***
lesdites trames de transmission (FR) consistent en une section de contrôle (CP) et en une section de données (DP), dans laquelle ledit moyen de détermination de transmission de données (DTDM) permet de déterminer le rapport de puissance de l'information contenue dans la section de données (DP) par l'information contenue dans la section de contrôle (CP) et comporte un moyen d'estimation de puissance permettant de déterminer qu'aucune transmission de données n'aura lieu durant un intervalle temporel correspondant à un nombre prédéterminé de créneaux de données ou de trames de données après l'envoi dudit signal de déclenchement de mesurage IF, cela si ledit rapport de puissance est inférieur à un rapport de puissance prédéterminé.

**9.** Station d'abonné (MS) selon la revendication 4
***caractérisée par***
un moyen de fonctionnement en mode actif (SOM) permettant de maintenir la station d'abonné (MS) dans un mode de fonctionnement inactif, dans lequel au moins une communication de signalisation est établie entre ladite station d'abonné (MS) et ladite station émettrice-réceptrice de base (RBS), et par un moyen de surveillance de drapeau de pagination (PFMM) permettant de surveiller la transmission d'un drapeau de pagination (PF') depuis ladite station émettrice-réceptrice de base (RBS) vers ladite station d'abonné (MS), dans laquelle, lorsque ledit moyen de surveillance de drapeau de pagination (PFMM) ne détermine aucune transmission dudit drapeau de pagination (PF), ledit moyen de détermination de transmission de données (DTDM) détermine qu'une transmission de données n'aura pas lieu durant un intervalle temporel correspondant à un nombre prédéterminé de créneaux de données après la détection dudit drapeau de pagination (PF).

**10.** Station d'abonné (MS) selon l'une quelconque des revendications 8 ou 9,
***caractérisée en ce que***
ledit système de communication mobile est un système de communication CDMA ou WCDMA et ledit nombre prédéterminé de créneaux de données est compris dans une plage de 5 à 110 créneaux.

**11.** Station d'abonné (MS) selon l'une quelconque des revendications 8 ou 9,
***caractérisée en ce que***
ledit système de communication mobile est un système de communication TDMA ou FDMA et ledit nombre prédéterminé de créneaux de données est compris dans une plage de 10 à 128 créneaux.

**12.** Station d'abonné (MS) selon l'une quelconque des revendications 8 ou 9,
***caractérisée en ce que***
ledit nombre prédéterminé de créneaux de données est communiqué à ladite station d'abonné (MS) par un moyen de contrôle de réseau (RNC).

**13.** Station d'abonné (MS) selon l'une quelconque des revendications 8 ou 9,
***caractérisée en ce que***
ladite transmission de données entre ladite station d'abonné (MS) et ladite station émettrice-réceptrice de base (RBS) est effectuée dans un mode compressé par compression de données de transmission dans ladite section de données (DP) dans au moins un créneau temporel procurant un intervalle de temps mort dans ledit créneau temporel où aucune transmission de données n'a lieu, dans laquelle ladite station d'abonné MS contient un moyen de détection du mode de compression CMDM permettant de détecter la transmission de données dans ledit mode compressé et dans laquelle ledit intervalle temporel prédéterminé correspond à un certain nombre de trames de données durant lesquelles aucune transmission de données n'a lieu et à un certain nombre de sections de temps mort (IT) de créneaux de données où une transmission de données est effectuée en mode compressé.

**14.** Station d'abonné (MS) selon l'une quelconque des revendications 1 ou 13,
**caractérisée en ce que**
ledit moyen de détermination de transmission de données (DTDM) permet en outre de déterminer un intervalle temporel additionnel durant lequel ladite station émettrice-réceptrice de base (RBS) envoie une transmission de données vers ladite station d'abonné (MS).

**15.** Station d'abonné (MS) selon la revendication 4
**caractérisée en ce que**
ledit moyen de mesurage IF (IFMM) effectue aussi des mesurages dans ledit intervalle temporel additionnel durant lequel une transmission de données a lieu depuis la station émettrice-réceptrice de base (RBS), dans laquelle ladite station d'abonné (MS) contient un moyen d'effacement (DEL) permettant d'éliminer les données provenant dudit intervalle temporel additionnel.

**16.** Procédé pour effectuer des mesurages entre fréquences IF (ST21, ST21'', ST21'''') dans une station d'abonné (MS) d'un système de communication mobile (GSM, WCDMA),
**caractérisé par**
les étapes consistant à : établir une communication de signalisation entre ladite station d'abonné (MS) et une station émettrice-réceptrice de base (RBS) ; déterminer (ST211, ST211', ST211'') un intervalle temporel prédéterminé durant lequel la station émettrice-réceptrice de base (RBS) ne transmettra pas de données vers ladite station d'abonné (MS) en surveillant la transmission d'une information dans la communication de signalisation et en déterminant si l'information de la communication de signalisation n'est pas activée ; et la réalisation (ST212) desdits mesurages IF durant ledit intervalle temporel prédéterminé.

**17.** Procédé selon la revendication 16
**caractérisé en ce que**
ladite détermination dudit intervalle temporel prédéterminé est effectuée en réponse (ST13) à un signal de déclenchement de mesurage entre fréquences (IFTS).

**18.** Procédé selon la revendication 17
**caractérisé en ce que**
le procédé détermine (ST11, ST21) si les conditions de transmission dans ledit système de communication mobile nécessitent un transfert IF de ladite station d'abonné (MS) et ledit signal de déclenchement de mesurage IF (IFTS) est généré lorsqu'un transfert IF est nécessaire (NEHO, MEHO).

**19.** Procédé selon la revendication 18
**caractérisé en ce que**
ladite détermination (NEHO) du fait que lesdites conditions de transmission nécessitent (ST12) un transfert IF de ladite station d'abonné (MS) est réalisée (ST11) par un moyen de contrôle de réseau (RNC) et ledit signal de déclenchement de mesurage IF (IFTS) est transmis (ST13) depuis ledit moyen de contrôle de réseau (RNC) dudit système de communication mobile vers ladite station d'abonné (MS) via une station émettrice-réceptrice de base (RBS).

**20.** Procédé selon la revendication 18
**caractérisé en ce que**
ladite détermination (MEHO) du fait que lesdites conditions de transmission nécessitent (ST12) un transfert IF de ladite station d'abonné (MS) est réalisée (ST11) par ladite station d'abonné (MS) et ledit signal de déclenchement de mesurage IF (IFTS) est généré (ST13) par ladite station d'abonné (MS).

**21.** Procédé selon la revendication 17
**caractérisé en ce que**
une transmission de données entre ladite station émettrice-réceptrice de base (RBS) et ladite station d'abonné (MS) est effectuée en transmettant des trames de données (FR), dans lequel ledit intervalle temporel prédéterminé pour lequel il a été déterminé qu'une transmission de données sera effectuée ou non est un intervalle temporel correspondant à au moins une trame de données ou à au moins un créneau de données.

**22.** Procédé selon la revendication 21

*caractérisé en ce que*

lesdites trames de transmission (FR) consistent en une section de contrôle (CP) et en une section de données (DP), dans lequel le rapport de puissance de l'information contenue dans la section de données (DP) par l'information contenue dans la section de contrôle (CP) est déterminé (ST211') et dans lequel il est déterminé (ST211') qu'aucune transmission de données n'aura lieu durant un intervalle temporel correspondant à un nombre prédéterminé de trames de données ou de créneaux de données après l'envoi dudit signal de déclenchement de mesurage, cela si ledit rapport de puissance est inférieur à un rapport de puissance prédéterminé.

**23.** Procédé selon la revendication 17

*caractérisé en ce que*

dans un mode de fonctionnement inactif de ladite station d'abonné (MS) dans lequel au moins une communication de signalisation est établie entre ladite station d'abonné (MS) et ladite station émettrice-réceptrice de base (RBS), la transmission d'un drapeau de pagination (PF) depuis ladite station émettrice-réceptrice de base (RBS) vers ladite station d'abonné (MS) est surveillée (ST211' ') dans ladite Station d'abonné (MS), dans lequel, lorsqu'aucune transmission dudit drapeau de pagination (PF) n'est détectée, il est déterminé (ST211") qu'aucune transmission de données n'aura lieu durant un intervalle temporel correspondant à un nombre prédéterminé de trames de données ou de créneaux de données après la détection dudit drapeau de pagination (PF).

**24.** Procédé selon l'une des revendications 22 ou 23,

*caractérisé en ce que*

ledit système de communication mobile est une système de communication CDMA ou WCDMA et ledit nombre prédéterminé de créneaux de données est compris dans une plage de 5 à 110 créneaux.

**25.** Procédé selon l'une des revendications 22 ou 23,

*caractérisé en ce que*

ledit système de communication mobile est un système de communication TDMA ou FDMA et ledit nombre prédéterminé de créneaux de données est compris dans une plage de 10 à 128 créneaux.

**26.** Procédé selon l'une des revendications 22 ou 23,

*caractérisé en ce que*

ledit nombre prédéterminé de créneaux de données est communiqué à ladite station d'abonné (MS) depuis ledit moyen de contrôle de réseau (RNC).

**27.** Procédé selon l'une des revendications 22 ou 23,

*caractérisé en ce que*

dans un mode de fonctionnement compressé, des données de ladite section de données (DP) dans au moins un créneau temporel d'une trame de données sont compressées (ST21') par un moyen de contrôle de réseau (RNC) procurant un intervalle de temps mort (IT) dans ledit créneau temporel où aucune transmission de données n'a lieu, dans lequel une transmission de données dans ledit mode compressé est détectée (ST21'') dans ladite station d'abonné (MS) et dans lequel ledit intervalle temporel prédéterminé correspond à un certain nombre de trames de données ou de créneaux temporels dans lesquelles aucune transmission de données n'a lieu (ST211, ST211') ainsi qu'à un certain nombre de sections de temps mort de trames de données où une transmission de données est effectuée en mode compressé (ST21'').

**28.** Procédé selon la revendication 16

*caractérisé en ce que*

un intervalle temporel additionnel est déterminé durant lequel ladite station émettrice-réceptrice de base (RBS) envoie une transmission de données vers ladite station d'abonné (MS).

**29.** Procédé selon la revendication 28

*caractérise en ce que*

lesdits mesurages IF sont également effectués dans ledit intervalle temporel additionnel durant lequel une transmission de données a lieu depuis ladite station émettrice-réceptrice de base (RBS), dans lequel les données qui arrivent durant ledit intervalle temporel additionnel depuis ledit moyen de contrôle de réseau (RNC) sont éliminées dans ladite station d'abonné (MS).

**30.** Procédé pour effectuer des mesurages entre fréquences IF (ST21, ST21'', ST21'''') dans une station d'abonné (MS) d'un système de communication mobile (GSM, WCDMA) **caractérisé par** les étapes consistant à :

effectuer des transmissions de données entre au moins une station émettrice- réceptrice de base (RBS) et ladite station d'abonné (MS) via des trames de données (FR) comportant une section de contrôle (CP) et une section de données (DP), la station d'abonné (MS) comportant un moyen de mesurage (IFMM) entre fréquences (IF) qui effectue des mesurages IF en réponse à un signal de déclenchement de mesurage (IFTS) et un moyen de demande de transfert IF (HORM) pour générer ledit signal de déclenchement de mesurage IF (IFTS) lorsqu'il est déterminé (NEHO, MEHO) que les conditions de transmission dans ledit système de communication mobile nécessitent un transfert IF de ladite station d'abonné (MS), dans lequel un moyen de détermination de transmission de données (DTDM) détermine, dans une trame de données reçue depuis la station émettrice-réceptrice de base (RBS), le rapport de puissance de l'information contenue dans la section de données (DP) par l'information contenue dans la section de contrôle (CP) et détermine qu'aucune transmission de données n'aura lieu durant un intervalle temporel correspondant à un nombre prédéterminé de trames de données ou de créneaux de données après l'envoi dudit signal de déclenchement de mesurage IF, cela si ledit rapport de puissance est inférieur à une valeur prédéterminée, dans lequel ledit moyen de mesurage IF (IFMM) effectue lesdits mesurages IF durant ledit intervalle temporel prédéterminé.

31. Système de communication mobile comprenant au moins une station d'abonné (MS) selon une ou plusieurs des revendications 1 à 15.

32. Système selon la revendication 31
    **caractérisé par**
    un moyen de contrôle de réseau (RNC) comprenant ledit moyen de demande de transfert IF (HORM) permettant de transmettre ledit signal de déclenchement de mesurage IF (IFTS) vers ladite station d'abonné (MS) via une station émettrice-réceptrice de base (RBS) en réponse à la détermination d'un transfert évalué par le réseau (NEHO).

33. Système selon la revendication 31
    **caractérise en ce que**
    ledit moyen de contrôle de réseau (RNC) permet de communiquer un nombre prédéterminé de créneaux de données à ladite station d'abonné (MS) durant ledit intervalle temporel.

**FIG.1** PRIOR ART

<u>T1</u>                                                                              <u>T2</u>

WCDMA

TELE

EP 1 206 891 B1

# FIG.2
## PRIOR ART

ST11 — MONITORING OF THE NETWORK PERFORMANCE(CAPACITY/COVERAGE)

ST12 — INTER-FREQUENCY (IF) HANDOVER (HO) NECESSARY ?

NO

YES

ST13 — MOBILE STATION IS TRIGGERED TO PERFORM INTER- FREQUENCY MEASUREMENTS

ST21 — MOBILE STATION PERFORMS MEASUREMENTS IN A GIVEN TIME INTERVAL

ST22 — IF-HO TO SELECTED CELL POSSIBLE ?

NO

ST23 — SELECT NEW TARGET CELL

YES

ST3 — NETWORK PERFORMS IF-HO TO NEW CELL

27

# *FIG.3-1*  PRIOR ART

1 FRAME

| TS1 | TS2 | TS3 | TS4 | TS5 | TS6 | TS7 | TS8 | TS9 | TS10 | TS11 | TS12 | TS13 | TS14 | TS15 |

FR

CDMA FRAMES

*(a)*

| PS | CS | DATA | ...

CP

DP

COMPRESSED MODE → SF DECREASED

*(b)*

| PS | CS | DATA | IT | ...

CP

DP

ITP

EP 1 206 891 B1

## *FIG.3- 2*

PRIOR ART

ST11 — MONITORING OF THE NETWORK PERFORMANCE(CAPACITY/COVERAGE)

ST12 — IS INTER-FREQUENCY (IF) HANDOVER (HO) NECESSARY ? — NO

YES

ST13 — MOBILE STATION IS TRIGGERED TO PERFORM INTER- FREQUENCY MEASUREMENTS

ST21' — NETWORK INDICATES COMPRESSED MODE OF OPERATION→TIME INTERVAL = REST INTERVAL OF FR

ST21" — MOBILE STATION ENTERS COMPRESSED MODE OF OPERATION AND PERFORMS FIELD MEASUREMENT IN IDLE TIME PERIOD

ST22 — HO TO SELECTED CELL POSSIBLE ? — NO

ST23 — SELECT NEW TARGET CELL

YES

ST3 — NETWORK PERFORMS HO TO NEW CELL

*FIG.4- 1* PRIOR ART

EP 1 206 891 B1

## *FIG.4-2*

### PRIOR ART

ST11 — MONITORING OF THE NETWORK PERFORMANCE(CAPACITY/COVERAGE)

ST12 — IS INTER-FREQUENCY (IF) HANDOVER (HO) NECESSARY ?

NO

YES

ST13 — MOBILE STATION IS TRIGGERED TO PERFORM INTER- FREQUENCY MEASUREMENTS

ST21''' — NETWORK DOES NOT INVERT DATA INFO PREDETERMINED TIME SLOT(S) = TIME INTERVAL

ST21'''' — MOBILE STATION CARRIES OUT FIELD MEASUREMENT IN THE TIME INTERVAL OF THE TIME SLOT (S)

ST22 — HO TO SELECTED CELL POSSIBLE ?

NO

ST23 — SELECT NEW TARGET CELL

YES

ST3 — NETWORK PERFORMS HO TO NEW CELL

**FIG.5** PRIOR ART

(a)

(b)

EP 1 206 891 B1

## FIG.5c

| SLOW POWER CONTROL | FAST POWER CONTROL |
|---|---|

(OUTER LOOP)
RNC- SIDE OR MS- SIDE

(INNER LOOP)
NODE B- SIDE OR MS- SIDE

MEASURE FER OR BLER — P1

COMPARE FER TO FER TARGET (ALTERNATIVELY BLER TO BLER_TARGET) AND CALCULATE CHANGE IN SIR_TARGET — P2

MEASURE SIR/SLOT — P5

SEND NEW SIR_TARGET
P8

P4
SIR MEAS. > SIR_TARGET ? — YES

NEIN

P6
SEND INCREASE COMMAND TO MS/NETWORK e.g. TPC= "11"

P7
SEND DECREASE COMMAND TO MS/NETWORK i.e. TPC= "00"

## FIG.5d

DELTA_SIR_TARGET (dB)

UL_DELTA_SIR_2

DELTA_SIR_TARGET*

0

UL_DELTA_SIR_1

KNOWN (SIMULATED)

LOG (MEASURED FER)

LOG (MEASURED FER)

"WORKING AREA"

*FIG.6* PRIOR ART

EP 1 206 891 B1

**FIG.7**

PRINCIPLE OF
THE INVENTION

EP 1 206 891 B1

# FIG.8

## PRINCIPLE OF THE INVENTION

ST11 — MONITORING OF THE NETWORK PERFORMANCE(CAPACITY/COVERAGE)

ST12 — IS INTER-FREQUENCY (IF) HANDOVER (HO) NECESSARY ? — NO

YES

ST13 — MOBILE STATION IS TRIGGERED TO PERFORM INTER- FREQUENCY MEASUREMENTS

ST211 — MOBILE STATION DETERMINES AN INTERVAL IN WHICH NO DATA TRANSMISSION TAKES PLACE

ST212 — PERFORM INTER-FREQUENCY MEASUREMENT IN THE TIME INTERVAL IN WHICH NO DATA TRANSMISSION TAKES PLACE

ST22 — IF-HO TO SELECTED CELL POSSIBLE ? — NO

ST23 — SELECT NEW TARGET CELL

YES

ST3 — NETWORK PERFORMS IF-HO TO NEW CELL

# FIG. 9

FIRST EMBODIMENT

ST11 — MONITORING OF THE NETWORK PERFORMANCE(CAPACITY/COVERAGE)

ST12 — IS INTER-FREQUENCY (IF) HANDOVER (HO) NECESSARY ?
NO
YES

ST13 — MOBILE STATION IS TRIGGERED TO PERFORM INTER- FREQUENCY MEASUREMENTS

ST211' — MOBILE STATION EVALUATES POWER RATIO OF DATA PORTION TO CONTROL PORTION IN THE CURRENT TIME SLOT; IF RATIO IS ≤ THRESHOLD →NO DATA TIME INTERVAL= A NUMBER OF SUCEEDING FR

ST212 — PERFORM INTER-FREQUENCY MEASUREMENT IN THE TIME INTERVAL IN WHICH NO DATA TRANSMISSION TAKES PLACE

ST22 — IF-HO TO SELECTED CELL POSSIBLE ?
NO → ST23 — SELECT NEW TARGET CELL
YES

ST3 — NETWORK PERFORMS IF-HO TO NEW CELL

# FIG.10
## SECOND EMBODIMENT

ST11 — MONITORING OF THE NETWORK PERFORMANCE(CAPACITY/COVERAGE)

ST12 — IS INTER-FREQUENCY (IF) HANDOVER (HO) NECESSARY ?

NO

YES

ST13 — MOBILE STATION IS TRIGGERED TO PERFORM INTER- FREQUENCY MEASUREMENTS

ST211" — MOBILE STATION IN NON-ACTIVE BUT REGISTERED OPERATION STATE MONITORS A PAGING FLAG TRANSMISSION; WHEN NO PF DETECTED → TIME INTERVAL= NUMBER OF FRs

ST212 — PERFORM INTER-FREQUENCY MEASUREMENT IN THE TIME INTERVAL IN WHICH NO DATA TRANSMISSION TAKES PLACE

ST22 — IF-HO TO SELECTED CELL POSSIBLE ?

NO

ST23 — SELECT NEW TARGET CELL

YES

ST3 — NETWORK PERFORMS IF-HO TO NEW CELL

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5533014 A

- US 5896368 A